# EUROPÄISCHE PATENTSCHRIFT

(11) **EP 4 426 460 B1**
(45) Veröffentlichungstag und Bekanntmachung des Hinweises auf die Patenterteilung: **21.01.2026**
(21) Anmeldenummer: 22813126.4
(22) Anmeldetag: 27.10.2022
(51) Int. Cl.: B01D 29/15, B01D 35/16, B01D 35/153

(54) **VERSCHLUSSELEMENT FÜR WENIGSTENS EINE ABLASSÖFFNUNG EINES FILTERSYSTEMS, FILTERGEHÄUSETEIL EINES FILTERSYSTEMS, FILTERELEMENT, FILTERSYSTEM, VERWENDUNG EINES FILTERELEMENTS UND EINES VERSCHLUSSELEMENTS IN EINEM FILTERSYSTEM**
CLOSURE ELEMENT FOR AT LEAST ONE DRAINAGE OPENING OF A FILTER SYSTEM, FILTER HOUSING PART OF A FILTER SYSTEM, FILTER ELEMENT, FILTER SYSTEM, USE OF A FILTER ELEMENT AND OF A CLOSURE ELEMENT IN A FILTER SYSTEM
ÉLÉMENT DE FERMETURE POUR AU MOINS UNE OUVERTURE DE DRAINAGE D'UN SYSTÈME DE FILTRATION, FILTRE, ÉLÉMENT FILTRANT, SYSTÈME DE FILTRATION, UTILISATION D'UN ÉLÉMENT FILTRANT ET D'UN ÉLÉMENT DE FERMETURE DANS UN SYSTÈME DE FILTRATION

(30) Priorität: 03.11.2021 DE 102021128603
(43) Veröffentlichungstag der Anmeldung: 11.09.2024
(73) Patentinhaber: MANN+HUMMEL GmbH, 71636 Ludwigsburg (DE)
(72) Erfinder: LINHART, Jochen, 71409 Schwaikheim (DE); PFLÜGER, Frank, 74343 Sachsenheim (DE)
(74) Vertreter: Mann + Hummel Intellectual Property
(86) Internationale Anmeldenummer: PCT/EP2022/080123
(87) Internationale Veröffentlichungsnummer: WO 2023/078786

(56) Entgegenhaltungen:
- WO-A1-2014/191476
- WO-A1-2018/102095
- DE-A1- 102015 008 693
- US-A1- 2017 197 160

## Beschreibung

### Technisches Gebiet

Die Erfindung betrifft ein Verschlusselement für wenigstens eine Ablassöffnung eines Filtersystems, ein Filtergehäuseteil eines Filtersystems, ein Filterelement, ein korrespondierendes Filtersystem und eine Verwendung eines Filterelements sowie eines Verschlusselements in einem solchen Filtersystem.

### Stand der Technik

Filtersysteme mit austauschbaren Filterelementen sind dem Fachmann bekannt. Die Filtersysteme umfassen ein Gehäuse, in welchem ein austauschbares Filterelement angeordnet ist, wobei ein Filtermedium des Filterelements einen das Filterelement durchströmenden Fluidstrom filtert. Das Gehäuse kann wenigstens zwei Gehäuseteile umfassen, welche lösbar miteinander verbunden sind. Die Gehäuseteile bilden im verbundenen Zustand einen Hohlraum aus, in welchem das Filterelement auswechselbar angeordnet ist. Wenigstens eins der Gehäuseteile umfasst wenigstens eine Ablassöffnung. Durch das Freigeben der wenigstens einen Ablassöffnung kann das Fluid im Gehäuse aus dem Gehäuse abgelassen werden.

Verschlusselemente, welche die wenigstens eine Ablassöffnung des Filtersystems in wenigstens einer ersten Stellung verschließen und in wenigstens einer zweiten Stellung zumindest teilweise freigeben, sind ebenfalls bekannt. Die Verschlusselemente können wenigstens ein Dichtungselement und wenigstens ein Verbindungselement umfassen.

Ein austauschbares Filterelement weist in der Regel ein Filtermedium auf, welches beispielsweise hohlzylinderförmig ausgestaltet und von einem zu reinigenden Fluid von einer Außenseite zu einer Innenseite durchströmt wird und welches an zwei gegenüber liegenden Enden durch wenigstens zwei Endscheiben abgeschlossen ist. Das Filtermedium kann von einem Mittelrohr von innen gegen den hydraulischen Druck des strömenden Fluids gestützt werden. Wenigstens eine Endscheibe kann wenigstens eine Ablassöffnung aufweisen. Durch das Freigeben der wenigstens einen Ablassöffnung kann das Fluid im Gehäuse aus dem Gehäuse abgelassen werden.

Korrespondierende Verwendungen eines Filterelements sowie eines Verschlusselements in einem solchen Filtersystem sind dem Fachmann ebenfalls bekannt.

DE 102013216853 B4 offenbart eine Filtereinrichtung zum Filtern eines Fluids, insbesondere eines Kraftfahrzeugs, mit einem Filtergehäuse und einem daran an einem fluidleitenden Anschluss anzukoppelnden Filterelement. Der fluidleitende Anschluss ist mit einer nicht rotationssymmetrischen Querschnittsform gestaltet, bei der das Filterelement mittels einer Schiebebewegung an dem Filtergehäuse anzukoppeln ist.

Bei der Filtereinrichtung ist zumindest ein elektrischer Kontakt zwischen dem Filtergehäuse und dem Filterelement vorgesehen, der ebenfalls mittels der Schiebebewegung herzustellen ist.

EP 3666363 A1 offenbart ein Fluidfilterelement. Das Fluidfilterelement umfasst ein Filtermedium, welches in einer zylindrischen Anordnung um eine Längsachse angeordnet ist. Das Fluidfilterelement umfasst weiter eine erste und eine zweite Endscheibe, die an gegenüberliegenden zylindrischen Enden des Filtermediums angeordnet und mit diesem abgedichtet sind, wobei die zweite Endscheibe einen Auslass für gefiltertes Fluid definiert. Das Fluidfilterelement umfasst weiter mindestens einen an der zweiten Endscheibe angeordneten Verriegelungsvorsprung zum drehbaren Verriegeln des Fluidfilters an dem Filterträger durch Drehung des Fluidfilterelements um die Längsachse in einer ersten Drehrichtung relativ zu dem Filterträger. Das Fluidfilterelement umfasst zudem mindestens einen lösbaren Halter, der an der zweiten Endscheibe angeordnet und dem mindestens einen Verriegelungsvorsprung zugeordnet ist, um den mindestens einen Verriegelungsvorsprung in Verriegelungseingriff mit dem Filterträger zu halten, und der, wenn er gelöst ist, ein drehbares Entriegeln des Fluidfilterelements von dem Filterträger durch Drehen des Fluidfilterelements um die Längsachse in einer zweiten Drehrichtung relativ zu dem Filterträger entgegengesetzt zur ersten Drehrichtung ermöglicht.

Aus der US 2017/0197160 A1 ist ein Filtersystem mit einem gehäuseseitigen Verschlusselement bekannt, welches die Reinseite verschließt. Beim Einsetzen des Filterelements wird das Verschlusselement durch ein Betätigungselement am Filterelement geöffnet.

Aus der DE 10 2015 008 693 A1 ist ein Hohlfilterelement mit einem an einer axialen Stirnseite angeordneten Verschlusselement bekannt, welches eine Ablauföffnung im Gehäuse verschließt. Die Schließachse des Verschlusselements verläuft exzentrisch zur Elementachse.

Die WO 2014/191476A1 beschreibt ein Filterelement mit einem Fluidpfad für ein erstes Fluid und einem zweiten Fluidpfad zur Führung eines zweiten Fluids, wobei im zweiten Fluidpfad ein Rückschlagventil angeordnet ist, welches den zweiten Fluidpfad sperrt, wenn ein Fluss des ersten Fluids unterbrochen wird.

### Offenbarung der Erfindung

Eine Aufgabe der Erfindung ist es, ein Verschlusselement für wenigstens eine Ablassöffnung eines Filtersystems zu schaffen, welches einfach in der vorgesehenen Position am Filtersystem anbringbar ist.

Eine weitere Aufgabe der Erfindung ist es, ein Filtergehäuseteil eines Filtersystems zu schaffen, dessen Ablassöffnung zuverlässig durch ein Verschlusselement abgedichtet sein kann.

Eine weitere Aufgabe der Erfindung ist es, ein Filterelement zu schaffen, dessen Ablassöffnung zuverlässig durch ein Verschlusselement abgedichtet sein kann.

Eine weitere Aufgabe der Erfindung ist es, ein Filtersystem zu schaffen, welches durch ein Verschlusselement zuverlässig abgedichtet sein kann.

Eine weitere Aufgabe der Erfindung ist es, eine Verwendung eines Filterelements in einem Filtersystem zu schaffen, welche einfach umgesetzt werden kann.

Eine weitere Aufgabe der Erfindung ist es, eine Verwendung eines Verschlusselements in einem Filtersystem zu schaffen, welche einfach umgesetzt werden kann.

Die vorgenannte Aufgabe wird nach einem Aspekt der Erfindung gelöst mit einem Verschlusselement für wenigstens eine Ablassöffnung eines Filtersystems mit einem Verbindungssegment und einem daran in Längsrichtung anschließenden Verschlusssegment, wobei wenigstens eine Mittelachse des Verschlusssegments versetzt zu wenigstens einer Mittelachse des Verbindungssegments angeordnet ist.

Eine weitere Aufgabe wird gelöst durch ein Filtergehäuseteil für ein Filtersystem mit einem Innenraum und einer mit dem Innenraum gekoppelten Ablassöffnung, wobei die Ablassöffnung wenigstens zwei in Längsrichtung hintereinander angeordnete Abschnitte aufweist, wobei wenigstens ein Verbindungsabschnitt eine in Längsrichtung verlaufende Mittelachse aufweist und wenigstens ein Dichtungsabschnitt eine in Längsrichtung verlaufende Mittelachse aufweist. Die Mittelachse des wenigstens einen Verbindungsabschnitts ist versetzt zur Mittelachse des wenigstens einen Dichtungsabschnitts angeordnet. Der wenigstens eine Verbindungsabschnitt der Ablassöffnung und das Verbindungssegment des Verschlusselements bilden eine lösbare Verbindung aus und wenigstens einer der Dichtungsbereiche des Verschlusssegments des Verschlusselements bildet mit wenigstens einem Dichtungsbereich des wenigstens einen Dichtungsabschnitts der Ablassöffnung eine Dichtungsanordnung aus.

Eine weitere Aufgabe wird gelöst durch ein Filterelement mit einem Filtermedium und wenigstens einer Endscheibe, wobei die wenigstens eine Endscheibe einen Eingriffsabschnitt mit wenigstens einer Mittelachse und wenigstens einem zumindest teilumfänglich verlaufenden Eingriffsbereich aufweist. Die wenigstens eine Mittelachse der Eingriffsabschnitts ist versetzt zu wenigstens einer weiteren Mittelachse des Filterelements oder versetzt zur Mittelachse der Endscheibe oder versetzt zur weiteren Mittelachse des Filterelements und versetzt zur Mittelachse der Endscheibe angeordnet.

Eine weitere Aufgabe wird gelöst durch ein Filtersystem mit einem Filtergehäuseteil, welches einen Innenraum und eine mit dem Innenraum gekoppelte Ablassöffnung umfasst, wobei die Ablassöffnung wenigstens zwei zueinander versetzte Mittelachsen umfasst. Ein Verschlusselement mit wenigstens zwei zueinander versetzten Mittelachsen verschließt die Ablassöffnung in wenigstens einer ersten Stellung dichtend und gibt in wenigstens einer zweiten Stellung die Ablassöffnung zumindest teilweise frei. Im Innenraum des Filtergehäuseteils ist ein Filterelement mit einem Eingriffsabschnitt angeordnet, wobei der Eingriffsabschnitt mit wenigstens einen Dichtungsbereich des Verschlusselements in Eingriff steht oder bringbar ist.

Eine weitere Aufgabe wird gelöst durch die Verwendung eines Filterelements in einem Filtersystem, wobei das Filterelement in einen Innenraum des Filtergehäuseteils eingeführt wird und so zu dem Filtergehäuseteil ausgerichtet wird, dass wenigstens eine Mittelachse des Eingriffsabschnitts des Filterelements versetzt zu wenigstens einer Mittelachse der Ablassöffnung des Filtergehäuseteils angeordnet ist.

Eine weitere Aufgabe wird gelöst durch eine Verwendung eines Verschlusselements in einem Filtersystem, wobei das Verschlusselement in die Ablassöffnung des Filtergehäuseteils eingeführt wird. Wenigstens ein erster Abschnitt eines Verschlusssegments ragt in den wenigstens einen Dichtungsabschnitt der Ablassöffnung. Der wenigstens eine Dichtungsbereich des Verschlusssegments und wenigstens ein Dichtungselement dichten die Ablassöffnung am korrespondierenden Dichtungsbereich des Dichtungsabschnitts ab. Die Mittelachse des ersten Abschnitts ist hierbei deckungsgleich zur Mittelachse des Dichtungsabschnitts angeordnet. Ein Verbindungselement des Verbindungssegments des Verschlusselements bildet mit einem Verbindungselement des Verbindungsabschnitts der Ablassöffnung eine lösbare Verbindung aus, wobei die Mittelachse des Verbindungssegments deckungsgleich zur Mittelachse des Verbindungsabschnitts angeordnet ist.

Günstige Ausgestaltungen und Vorteile der Erfindung ergeben sich aus den weiteren Ansprüchen, der Beschreibung und der Zeichnung.

Es wird nach einem Aspekt der Erfindung ein Verschlusselement für wenigstens eine Ablassöffnung eines Filtersystems, mit einem Verbindungssegment und einem daran in Längsrichtung anschließenden Verschlusssegment, welches wenigstens einen Dichtungsbereich aufweist, vorgeschlagen. Das Verbindungssegment und das Verschlusssegment weisen jeweils wenigstens eine in Längsrichtung verlaufende Mittelachse auf, wobei wenigstens eine der Mittelachsen des Verschlusssegments versetzt zu wenigstens einer der Mittelachsen des Verbindungssegments angeordnet ist.

Es versteht sich von selbst, dass das erfindungsgemäße Verschlusselement nicht nur zum Verschluss von Ablassöffnungen von Filtersystemen geeignet ist, sondern ebenso zum Verschluss von Ablauföffnungen von anderweitigen Fluidwannen bzw. -sümpfen, etwa Ölwannen von Brennkraftmaschinen oder Getrieben. Die Erfindung ist jedenfalls explizit nicht auf einen Einsatz des erfindungsgemäßen Verschlusselements in Filtersystemen beschränkt.

Unter einem Verschlusselement wird ein Bauteil verstanden, welches in wenigstens eine Ablassöffnung des Filtersystems einführbar ist und diese im eingeführten Zustand in wenigstens einer ersten Stellung dichtend verschließt. Hierbei ist das Verschlusselement lösbar mit der wenigstens einen Ablassöffnung verbunden. Das Verschlusselement weist ein Verbindungssegment und ein Verschlusssegment auf.

Unter einem Verschlusssegment wird ein Segment verstanden, welches in der wenigstens einen ersten Stellung des Verschlusselements wenigstens eine der Ablassöffnungen des Filtersystems dichtend verschließen kann. Zu diesem Zweck kann ein Dichtungselement bzw. können Dichtungselemente zwischen einem korrespondierenden Dichtungsbereich des Verschlusssegments und einem Dichtungsbereich eines Dichtungsabschnitts der Ablassöffnung angeordnet sein. Ein Dichtungselement kann hierbei während des Einführens des Verschlusselements in die Ablassöffnung am Dichtungsbereich des Verschlusssegments oder am Dichtungsbereich des korrespondierenden Dichtungsabschnitts der Ablassöffnung angeordnet sein. Weist die Dichtungsanordnung mehrere Dichtungselemente auf, können diese während des Einführens des Verschlusselements in die Ablassöffnung am Dichtungsbereich des Verschlusssegments oder am Dichtungsbereich des korrespondierenden Dichtungsabschnitts der Ablassöffnung angeordnet sein oder wenigstens ein Dichtungselement kann am Dichtungsbereich des Verschlusssegments und wenigstens ein weiteres Dichtungselement kann am Dichtungsbereich des korrespondierenden Dichtungsabschnitts der Ablassöffnung angeordnet sein.

Unter einem Verbindungssegment wird ein Segment verstanden, welches mit einem Verbindungsabschnitt der Ablassöffnung lösbar verbunden werden kann.

Die Mittelachsen des Verschlusselements verlaufen jeweils mittig durch den Querschnitt des korrespondierenden Segments bzw. eines korrespondierenden Abschnitts des Segments. Die Querschnitte der Segmente und die Querschnitte der Abschnitte der Segmente können gleich ausgeführt und lediglich versetzt zueinander angeordnet sein. Zusätzlich können sich die Segmente jeweils insbesondere durch die Ausführung ihres Querschnitts voneinander unterscheiden.

Die Querschnitte der Segmente oder die Querschnitte der Abschnitte können rotationssymmetrisch zur korrespondierenden Mittelachse oder spiegelsymmetrisch zu wenigstens einer durch die korrespondierende Mittelachse verlaufenden Ebene oder Achse ausgeführt sein. Bei nicht kreisförmigen Querschnitten können sich die Querschnitte durch ihre Ausrichtungen voneinander unterscheiden.

Querschnitte der Segmente oder Querschnitte der Abschnitte der Segmente können sich durch ihre geometrische Form, beispielsweise eine eckige oder eine runde Form unterschieden. Zudem können sich die Querschnitte in der Größe der Fläche oder in der Größe der Durchmesser bzw. der Kantenlängen bei gleichen Formen unterscheiden.

Beispielsweise kann das Verschlusselement zylinderförmig ausgeführt sein. Hierbei können das Verbindungssegment und das Verschlusssegment jeweils einen runden Querschnitt aufweisen. Zudem können die Segmente mehrere Abschnitte mit korrespondierenden Querschnitten mit unterschiedlichem oder gleichem Durchmesser aufweisen. In einer alternativen Ausgestaltung können das Verschlusssegment oder das Verbindungssegment oder das Verschlusssegment und das Verbindungselement mindestens einen eckigen Querschnitt aufweisen. Dadurch kann das Verschlusselement an verschiedene Abschnitte der Ablassöffnungen angepasst sein.

Die Mittelachsen verlaufen jeweils parallel zu einer Längsrichtung des Verschlusselements. Die Mittelachsen können um 0,1 mm bis zu 3 mm, insbesondere um 0,5 mm bis 1,5 mm zueinander versetzt angeordnet sein. Durch den Versatz der Mittelachsen des Verschlusselements ist wenigstens ein Bereich an einer Außenkontur des Verschlusselements mit einem Versatz ausgebildet. Weitere Bereiche mit einem Versatz an der Außenkontur können durch Segmente oder durch Abschnitte von Segmenten mit unterschiedlichen Querschnitten ausgebildet sein.

Durch den Bereich oder durch die Bereiche der Außenkontur mit einem Versatz kann ein Anwender einfach nachzuvollziehen, ob das Verschlusselement bzw. die Segmente des Verschlusselements jeweils an der vorgesehenen Position in der Ablassöffnung angeordnet sind.

Zudem kann durch den wenigstens einen Versatz an der Außenkontur des Verschlusselements wenigstens ein Anschlag ausgebildet werden, welcher die Endstellung des Verschlusselements in der Ablassöffnung vorgibt und ein zu tiefes Einführen des Verschlusselements in die Ablassöffnung oder in den mit der Ablassöffnung gekoppelten Innenraum des Filtersystems erschwert. Durch den Versatz der Mittelachsen können Montagefehler wie eine zu geringe oder eine zu große Einführtiefe des Verschlusselements in der Ablassöffnung oder das Einführen mit einer anderen Ausrichtung des Verschlusselements als die vorgegebene Ausrichtung vermieden oder zumindest erschwert werden. Zudem kann das Anordnen eines Dichtungselements zwischen dem Dichtungsbereich des Verschlusssegments und dem korrespondierenden Dichtungsbereich des Dichtungsabschnitts der Ablassöffnung beispielsweise an einem wenig exponierten Bereich der Ablassöffnung erleichtert werden. Durch die zueinander versetzten Mittelachsen kann eine Nutzung von minderwertigen Teilen als Ersatz für das Verschlusselement erschwert und die Einhaltung eines Qualitätsstandards erleichtert werden.

Gemäß einer günstigen Ausgestaltung kann das Verbindungssegment drehbar am Verschlusssegment gelagert sein. Durch die drehbare Lagerung des Verbindungssegments am Verschlusssegment kann verhindert werden, dass beim Einführen des Verbindungssegments in die Ablassöffnung und/oder beim Befestigen des Verbindungssegments an der Ablassöffnung radiale Kräfte vom Verbindungssegment auf das Verschlusssegment übertragen werden. Alternativ können durch die drehbare Lagerung des Verbindungssegments am Verschlusssegment radiale Kräfte beim Einführen und/oder beim Befestigen des Verbindungssegments an der Ablassöffnung abgeschwächt werden. Hierbei können auf das Verschlusssegment hauptsächlich axiale Kräfte in Längsrichtung wirken. Dadurch kann ein Verdrehen und/oder ein Verdrillen und/oder ein Verrutschen des Dichtungselements am Verschlusssegment verhindert oder erschwert werden. Dadurch können Dichtungselemente seltener abscheren. Hierbei kann die Wahrscheinlichkeit erhöht werden, dass im eingeführten und befestigten Zustand des Verschlusselements in der Ablassöffnung das Dichtungselement an einem vorgegebenen Bereich zwischen dem korrespondierenden Dichtungsbereich der Ablassöffnung und dem korrespondierenden Dichtungsbereich des Verschlusssegments mit einer vorgegebenen Form angeordnet ist. Dadurch kann eine Abdichtung dieses Abschnitts der Ablassöffnung zuverlässig sichergestellt sein. Das Verschlusssegment kann fest mit dem Verbindungssegment gekoppelt sein, wodurch axiale Kräfte einfach auf das Verschlusssegment übertragen werden können. Das Verschlusssegment und das Verbindungssegment können über eine Kopplungsanordnung miteinander gekoppelt sein. Die Kopplungsanordnung kann Schnappelemente und/oder Schraubelemente und/oder Clipelemente und/oder Rastelemente und/oder Klemmelemente aufweisen. Hierbei ist eine vielfältige Umsetzung der Kopplung zwischen dem Verbindungssegment und dem Verschlusssegment möglich. Diese Kopplung kann lösbar oder dauerhaft sein.

Gemäß einer günstigen Ausgestaltung kann das Verschlusssegment wenigstens zwei Abschnitte aufweisen, wobei die Abschnitte jeweils einen Dichtungsbereich und eine Mittelachse aufweisen. Hierbei können die Abschnitte mit wenigstens einem korrespondierenden Dichtungselement gegen unterschiedliche Elemente des Filtersystems abdichten oder gegen unterschiedliche Dichtungsabschnitte der Ablassöffnung abdichten. Dadurch kann eine zuverlässige Abdichtung verschiedener Bereiche des Filtersystems mit einem einzigen Verschlusselement erzielt werden. Mehrere Abschnitte des Verschlusssegments können unterschiedliche Querschnitte aufweisen. Dadurch sind die Dichtungsbereiche verschiedener Abschnitte nach innen oder nach außen versetzt an der Außenkontur des Verschlusssegments angeordnet. Zusätzlich können mehrere Abschnitte des Verschlusssegments eine gemeinsame Mittelachse aufweisen, wodurch die korrespondierenden Dichtungsbereiche koaxial zueinander um die gemeinsame Mittelachse angeordnet sein können. Bei einer alternativen Ausgestaltung können die Mittelachsen der Abschnitte des Verschlusssegments versetzt zueinander angeordnet sein. Die Dichtungsbereiche verlaufen jeweils um die korrespondierende Mittelachse. Hierbei können die Dichtungsbereiche verschiedener Abschnitte ebenfalls nach innen oder nach außen versetzt an der Außenkontur des Verschlusselements abgeordnet sein. Bei dieser Ausgestaltung können die Querschnitte der Abschnitte gleich oder unterschiedlich ausgeführt sein. Hierbei können mehrere Dichtungsbereiche winkelfest am Verschlusssegment angeordnet sein. Die Dichtungsbereiche des Verschlusssegments können wenigstens eine Dichtungsaufnahme für das Dichtungselement oder wenigstens eine Anlagefläche für das Dichtungselement aufweisen. Eine Dichtungsaufnahme kann einer Dichtungsnut entsprechen, in welcher ein Dichtungselement eingelegt ist. Die Dichtungsbereiche und korrespondierenden Dichtungselemente können insbesondere durchgängig umlaufend am Verschlusssegment angeordnet sein. Hierbei können mehrere Dichtungsbereiche in Längsrichtung beabstandet zueinander angeordnet sein. In einer alternativen Ausgestaltung können mehrere Dichtungsbereiche rotationssymmetrisch zur korrespondierenden Mittelachse angeordnet sein. Optional oder zusätzlich können mehrere Dichtungsbereiche spiegelsymmetrisch zu einer in der Ebene des korrespondierenden Querschnitts und durch die korrespondierende Mittelachse verlaufenden Achse angeordnet sein.

Gemäß einer günstigen Ausgestaltung kann das Verbindungssegment wenigstens ein Verbindungselement aufweisen, welches komplementär zu einem Verbindungselement der Ablassöffnung ausgebildet ist. Beispielsweise kann das Verbindungselement einem Außengewinde oder einem Element einer Bajonettverbindung oder einem Element einer Rastverbindung oder einem Element einer Klemmverbindung oder einem Element einer Clipverbindung oder einem Element einer Schnappverbindung entsprechen. Durch die Verbindungselemente am Verbindungssegment und an der Ablassöffnung kann das Verbindungssegment einfach lösbar mit der Ablassöffnung verbunden werden.

Gemäß einer günstigen Ausgestaltung kann das Verbindungssegment an einem Endbereich wenigstens ein Betätigungselement zur Einleitung eines Betätigungsmoments aufweisen. Der Endbereich des Verbindungssegments, welcher das Betätigungselement aufweist, kann ein dem Verschlusssegment abgewandter Endbereich sein. Das wenigstens eine Betätigungselement kann beispielsweise eine Eingriffskontur in Form eines Innensechskant-, Außensechskant-, Schlitz-, Kreuzschlitz- oder Innenvielzahnprofils aufweisen.

Hierbei kann die Eingriffskontur sich von einer Oberfläche des Endbereichs abheben oder in die Oberfläche versenkt sein. Die Eingriffskontur kann bekannten Konturen beispielsweise einer Vielzahnkontur entsprechen oder die Eingriffskontur kann an ein eigenes Werkzeug angepasst sein. Optional kann das Betätigungselement ein mit dem Endbereich verbundener Hebel sein. Durch das Betätigungselement können einfach Kräfte vom Anwender auf das Verschlusselement übertragen werden, wodurch ein Verbinden des Verbindungssegments am Verbindungsabschnitt der Ablassöffnung und das Lösen des Verbindungssegments vom Verbindungsabschnitt der Ablassöffnung erleichtert werden kann. Je nach Ausführung des Betätigungselements können geeignete Werkzeuge verwendet werden. Zudem können die Werkzeuge an das Filtersystem oder an den Bauraum, in welchem das Filtersystem angeordnet ist, angepasst sein und können dadurch auch zum Einleiten der Kräfte genutzt werden, wenn das Betätigungselement von außen schwer zugänglich ist.

Gemäß einer günstigen Ausgestaltung kann das Verbindungssegment einen größeren Querschnitt aufweisen als das Verschlusssegment. Hierbei kann das Verbindungssegment über das Verschlusssegment zumindest teilweise herausragen. Dadurch kann einfach vorgegeben werden, welches Segment zuerst in die Ablassöffnung eingeführt wird, wodurch die Montage des Verschlusselements in der Ablassöffnung weiter erleichtert werden kann. Hierbei kann das Verschlusselement in eine Ablassöffnung eingeführt sein, welche einen Verbindungsabschnitt und wenigstens einen Dichtungsabschnitt aufweist. Der Dichtungsabschnitt ist einem dem Innenraum des Filtersystems zugewandten Endbereich der Ablassöffnung zugeordnet, der Verbindungsabschnitt ist einem dem Innenraum des Filtersystems abgewandten Endbereich der Ablassöffnung zugeordnet. Der größere Querschnitt des Verschlusssegments kann den innen liegenden Dichtungsabschnitt abdecken, wodurch das wenigstens eine zwischen dem Dichtungsbereich der Ablassöffnung im Dichtungsabschnitt und dem Dichtungsbereich des Verschlusssegments angeordnete Dichtungselement vor äußeren Einflüssen geschützt sein kann. Beispielsweise kann das wenigstens eine Dichtungselement vor Schmutz oder anderen äußeren Einflüssen geschützt sein.

Nach einem weiteren Aspekt der Erfindung wird ein Filtergehäuseteil für ein Filtersystem mit einem Innenraum und einer mit dem Innenraum gekoppelten Ablassöffnung vorgeschlagen, wobei ein Verschlusselement die Ablassöffnung in wenigstens einer ersten Stellung dichtend verschließt und in wenigstens einer zweiten Stellung die Ablassöffnung zumindest teilweise freigibt. Die Ablassöffnung weist wenigstens zwei in Längsrichtung hintereinander angeordnete Abschnitte auf, wobei wenigstens ein Verbindungsabschnitt eine in Längsrichtung verlaufende Mittelachse aufweist und wenigstens ein Dichtungsabschnitt eine in Längsrichtung verlaufende Mittelachse und wenigstens einen Dichtungsbereich aufweist. Die Mittelachse des wenigstens einen Verbindungsabschnitts ist versetzt zur Mittelachse des wenigstens einen Dichtungsabschnitts angeordnet, wobei der wenigstens eine Verbindungsabschnitt der Ablassöffnung und ein Verbindungssegment des Verschlusselements eine lösbare Verbindung ausbilden und wenigstens einer der Dichtungsbereiche eines Verschlusssegments des Verschlusselements mit dem Dichtungsbereich des wenigstens einen Dichtungsabschnitt der Ablassöffnung mit einem Dichtungselement eine Dichtungsanordnung ausbilden.

In der wenigstens einen ersten Stellung des Verschlusselements ist die Mittelachse des Verbindungssegments des Verschlusselements deckungsgleich zur Mittelachse des korrespondierenden Verbindungsabschnitts der Ablassöffnung angeordnet. Wenigstens eine der Mittelachsen des Verschlusssegments des Verschlusselements, welche versetzt zu wenigstens einer der Mittelachsen des Verbindungssegments angeordnet ist, ist deckungsgleich zur Mittelachse des korrespondierenden Dichtungsabschnitts der Ablassöffnung angeordnet. Hierbei weisen die Ablassöffnung und das Verschlusselement den gleichen Achsenversatz auf. Durch die versetzten Achsen des Verschlusselements und der Ablassöffnung ist die Ausrichtung des Verschlusselements in der Ablassöffnung vorgegeben. Zudem weist die Ablassöffnung an der Innenwand durch die zueinander versetzten Mittelachsen der Abschnitte Vorsprünge und/oder Einschnitte auf, welche komplementär zur Vorsprüngen und/oder Einschnitten der Außenkontur des Verschlusselements ausgebildet sind. Dadurch sind Anschläge für das Verschlusselement in der Ablassöffnung ausgebildet, welche eine Endstellung beim Einführen vorgeben. Zudem kann ein Anwender durch die Vorsprünge und/oder Einschnitte besser abschätzen, ob die Segmente des Verschlusselements in den vorgesehenen Abschnitten der Ablassöffnung angeordnet sind. Durch das zuverlässige Anordnen des Verschlusssegments in einer vorgegebenen Position kann eine zuverlässige Abdichtung der Ablassöffnung erfolgen.

Ein Dichtungselement kann als Dichtungsring ausgeführt sein und zwischen dem korrespondierenden Dichtungsbereichen des Verschlusssegments und des Dichtungsabschnitts der Ablassöffnung angeordnet sein. Hierbei kann der wenigstens eine Dichtungsabschnitt der Ablassöffnung einen Dichtungsbereich aufweisen, welcher als Dichtungsaufnahme oder als Dichtungsfläche ausgeführt ist. Das Verschlusssegment kann einen Dichtungsbereich aufweisen, welcher als Dichtungsaufnahme oder als Dichtungsfläche ausgeführt ist. In der wenigstens einen ersten Stellung des Verschlusselements ist der wenigstens eine Dichtungsbereich des Verschlusssegments gegenüberliegend zum wenigstens einen Dichtungsbereich des korrespondierenden Dichtungsabschnitts der Ablassöffnung angeordnet.

Die Ablassöffnung kann außermittig bei einer zylinderförmigen Ausführung des Filtergehäuseteils exzentrisch am Filtergehäuseteil angeordnet sein. Zudem kann die Ablassöffnung in Schwererichtung an einer unten liegenden Seite des Filtergehäuseteils angeordnet sein. Dadurch können die Mittelachsen der Ablassöffnung versetzt zu einer Mittelachse des Filtergehäuseteils angeordnet sein.

Das Filtergehäuseteil kann als Filtertopf für einen Flüssigkeitsfilter, insbesondere eines Kraftstoff- oder Ölfilters ausgebildet sein.

Gemäß einer günstigen Ausgestaltung kann der wenigstens eine Verbindungsabschnitt an einem dem Innenraum des Filtergehäuseteils abgewandten Bereich der Ablassöffnung und der wenigstens eine Dichtungsabschnitt an einem dem Innenraum des Filtergehäuseteils zugewandten Bereich der Ablassöffnung angeordnet sein. Dadurch kann ein erster Abschnitt des Verschlusssegments am Dichtungsabschnitt angeordnet sein und wenigstens ein weiterer Abschnitt des Verschlusssegments kann in den Innenraum des Filtergehäuseteils hineinragen. Zudem kann durch diese Anordnung unterbunden werden, dass die Verbindungselemente des Verbindungssegments und des Verbindungsabschnitts und/oder die Kopplungselemente des Verschlusselements im abgedichteten Zustand der Ablassöffnung mit dem Fluid in Kontakt kommen.

Gemäß einer günstigen Ausgestaltung kann, der wenigstens eine Verbindungsabschnitt der Ablassöffnung einen größeren Querschnitt aufweisen als der wenigstens eine Dichtungsabschnitt der Ablassöffnung. Dadurch kann sich die Ablassöffnung von außen nach innen verjüngen und eine Einführrichtung sowie eine Ausrichtung des Verschlusselements beim Einführen vorgeben. Zudem kann das Verbindungssegment entsprechend über das Verschlusssegment zumindest teilweise herausragen. Dadurch kann einfach vorgegeben werden, welches Segment zuerst in die Ablassöffnung eingeführt wird, wodurch die Montage des Verschlusselements in der Ablassöffnung weiter erleichtert werden kann. Der Dichtungsabschnitt ist einem dem Innenraum des Filtersystems zugewandten Endbereich der Ablassöffnung zugeordnet, der Verbindungsabschnitt ist einem dem Innenraum des Filtersystems abgewandten Endbereich der Ablassöffnung zugeordnet. Der größere Querschnitt des Verschlusssegments kann den innen liegenden Dichtungsabschnitt abdecken, wodurch das wenigstens eine zwischen dem Dichtungsbereich der Ablassöffnung im Dichtungsabschnitt und dem Dichtungsbereich des Verschlusssegments angeordnete Dichtungselement vor äußeren Einflüssen geschützt sein kann. Beispielsweise kann das wenigstens eine Dichtungselement vor Schmutz oder anderen äußeren Einflüssen sein.

Gemäß einer günstigen Ausgestaltung kann der wenigstens eine Verbindungsabschnitt der Ablassöffnung und das Verbindungssegment des Verschlusselements jeweils zueinander komplementäre lösbare Verbindungselemente aufweisen. Beispielsweise kann das Verbindungssegment des Verschlusselements ein Außengewinde und der Verbindungsabschnitt der Ablassöffnung ein Innengewinde aufweisen. Optional oder zusätzlich kann das Verbindungssegment wenigstens ein federgelagertes Element aufweisen, welches in eine korrespondierende Aufnahme des Verbindungsabschnitts der Ablassöffnung eingreift. Optional oder zusätzlich kann der Verbindungsabschnitt der Ablassöffnung das wenigstens eine federgelagerte Element aufweisen, welches in eine korrespondierende Aufnahme des Verbindungssegments eingreift. Optional oder zusätzlich kann ein Vorsprung am Verbindungssegment angeordnet sein, welcher in eine abknickende oder gebogene Führungsaussparung des Verbindungsabschnitts eingeführt wird. Alternativ oder zusätzlich kann der Vorsprung auch am Verbindungsabschnitt und die Führungsaussparung am Verbindungssegment angeordnet sein. Es ist eine Vielzahl von Verbindungsanordnungen vorstellbar und umsetzbar. Durch eine drehbare Lagerung des Verbindungssegments am Verschlusssegment kann die Rotationsbewegung des Verbindungssegments beim Verbinden mit dem Verbindungsabschnitt im Wesentlichen nicht auf das Verschlusssegment übertragen werden. Dadurch können mechanische Einflüsse auf das wenigstens eine Dichtungselement reduziert werden.

Gemäß einer günstigen Ausgestaltung können Wände der Ablassöffnung außerhalb des wenigstens einen Dichtungsbereichs ein Profil aufweisen. Dadurch kann verhindert werden, dass Dichtungselemente an anderen Bereichen als den vorgegeben Dichtungsbereichen angeordnet werden. Dadurch kann erreicht werden, dass Dichtungselemente an geschützten Bereichen angeordnet sind, wodurch die Haltbarkeit der Dichtungselemente verlängert und/oder die Zuverlässigkeit der Dichtungselemente verbessert werden können.

Nach einem weiteren Aspekt der Erfindung wird ein Filterelement mit einem Filtermedium und wenigstens einer Endscheibe vorgeschlagen, wobei die wenigstens eine Endscheibe einen Eingriffsabschnitt mit wenigstens einer in Längsrichtung verlaufenden Mittelachse und wenigstens einem Eingriffsbereich aufweist. Wenigstens eine der Mittelachsen der Eingriffsabschnitts ist versetzt zu wenigstens einer weiteren Mittelachse des Filterelements und/oder versetzt zur Mittelachse der Endscheibe angeordnet. Das Filterelement kann mehrere Mittelachsen aufweisen. Hierbei kann ein Mantel, welcher das Filtermedium zumindest teilweise umgeben kann, um wenigstens eine Mittelachse verlaufen und jede Endscheibe weist eine Mittelachse auf. Zudem kann das Filtermedium eine Mittelachse aufweisen. Ein Einlass kann bei entsprechender Ausrichtung ebenfalls eine in Längsrichtung verlaufenden Mittelachse aufweisen.

Der Mantel kann mittig oder außermittig auf der Endscheibe angeordnet sein. Hierbei kann die Mittelachse des Mantels deckungsgleich zur Mittelachse der Endscheibe oder deckungsgleich zur Mittelachse der Ablassöffnung anordnet sein. Eine versetzte Anordnung der Mittelachse des Mantels zur Mittelachse der Endscheibe oder zur Mittelachse der Ablassöffnung oder zur Mittelachse der Endscheibe und zur Mittelachse der Ablassöffnung ist ebenfalls vorstellbar. Mehrere Endscheiben können deckungsgleiche Mittelachsen oder versetzt zueinander angeordnete Mittelachsen aufweisen.

Das Filterelement kann mittig oder außermittig im Filtergehäuseteil angeordnet sein. Ein in den Innenraum des Filtergehäuseteils ragender weiterer Abschnitt des Verschlusssegments des Verschlusselements kann in die Ablassöffnung des Filterelements ragen und diese dichtend verschließen.

Die Endscheibe des Filterelements oder ein anderer Teil des Filterelements, etwa das Mittelrohr oder ein Außenmantel, kann Führungselemente und Befestigungselemente aufweisen. Das Filterelement kann durch die Führungselemente von entsprechenden Führungselementen des Filtergehäuseteils geführt werden, wodurch das Filterelement in einer vorgegeben Endstellung und je nach Führung in einer bestimmen Ausrichtung im Filtergehäuseteil angeordnet ist. Durch die Befestigungselemente kann das Filterelement am Filtergehäuseteil in dieser Stellung fixiert werden, wodurch ein ungewolltes Verrutschen des Filterelements im Filtergehäuseteil im Betrieb oder beim Transport oder beim Einführen des Verschlusselements vermieden werden kann.

Nach einer beispielhaften weiteren Ausführungsform des Filterelements kann der Eingriffsabschnitt eine Ablassöffnung sein, die die Endscheibe durchbricht und mit einem Elementinnenraum fluidisch kommuniziert, und wobei der Eingriffsbereich ein Dichtungsbereich ist.

In anderen Ausführungen kann es sich bei dem Eingriffsabschnitt aber auch um ein rein mechanisches Eingriffselement handeln, das die Endscheibe nicht durchbricht und insofern keine Ablassfunktion ermöglicht. Beispielsweise kann das Eingriffselement als Stutzen- oder Hülsenabschnitt auf der Endscheibe vorgesehen sein. Der Stutzen- oder Hülsenabschnitt kann eine sich in Umfangsrichtung erstreckende Wand aufweisen, die ununterbrochen oder unterbrochen sein kann. Mit dem Eingriffsabschnitt und/oder der Ablassöffnung ist in einem Betriebszustand des Filterelements in einem Filtersystem insbesondere ein zweiter Abschnitt des Verschlusssegments des Verschlusselements in Eingriff bringbar. Entweder der Eingriff am zweiten Abschnitt des Verschlusssegments des Verschlusselements dient nur zur rein mechanischen Verbindung, oder es ist hierdurch eine Dichtwirkung zur Steuerung eines Fluidablassvorgangs erreichbar.

Nach einem weiteren Aspekt der Erfindung wird ein Filtersystem mit einem Filtergehäuseteil vorgeschlagen, welches einen Innenraum und eine mit dem Innenraum gekoppelte Ablassöffnung umfasst, wobei ein Verschlusselement die Ablassöffnung in wenigstens einer ersten Stellung dichtend verschließt und in wenigstens einer zweiten Stellung die Ablassöffnung zumindest teilweise freigibt, wobei im Innenraum des Filtergehäuseteils ein Filterelement mit einem Eingriffsabschnitt angeordnet ist, wobei der Eingriffsabschnitt des Filterelements mit wenigstens einen Dichtungsbereich des Verschlusselements in Eingriff steht oder bringbar ist.

In einer bevorzugten Ausführungsform kann der Eingriffsabschnitt des Filterelements eine Ablassöffnung sein, wobei die Ablassöffnung des Filterelements mit der Ablassöffnung des Filtergehäuseteils fluidisch gekoppelt ist, bevorzugt über einen dem Filtergehäuseteil zugewandten Endbereich der Ablassöffnung des Filterelements.

Die Ablassöffnung des Filtergehäuseteils kann wenigstens zwei in Längsrichtung hintereinander angeordnete Abschnitte aufweisen, wobei wenigstens ein Verbindungsabschnitt eine in Längsrichtung verlaufende Mittelachse aufweist und wenigstens ein Dichtungsabschnitt eine in Längsrichtung verlaufende Mittelachse und wenigstens einen Dichtungsbereich aufweist. Die Mittelachse des wenigstens einen Verbindungsabschnitts ist versetzt zur Mittelachse des wenigstens einen Dichtungsabschnitt angeordnet, wobei der wenigstens eine Verbindungsabschnitt der Ablassöffnung und das Verbindungssegment des Verschlusselements eine lösbare Verbindung ausbilden und wenigstens einer der Dichtungsbereiche des Verschlusssegments des Verschlusselements mit dem Dichtungsbereich des wenigstens einen Dichtungsabschnitt der Ablassöffnung mit wenigstens einem Dichtungselement eine Dichtungsanordnung ausbilden.

In der wenigstens einen ersten Stellung des Verschlusselements ist die Mittelachse des Verbindungssegments des Verschlusselements deckungsgleich zur Mittelachse des korrespondierenden Verbindungsabschnitts der Ablassöffnung angeordnet. Wenigstens eine der Mittelachsen des Verschlusssegments des Verschlusselements, welche versetzt zu wenigstens einer der Mittelachsen des Verbindungssegments angeordnet ist, ist deckungsgleich zur Mittelachse des korrespondierenden Dichtungsabschnitts der Ablassöffnung angeordnet. Durch die versetzten Achsen des Verschlusselements und der Ablassöffnung ist die Ausrichtung des Verschlusselements in der Ablassöffnung vorgegeben. Zudem weist die Ablassöffnung an der Innenwand durch die zueinander versetzten Mittelachsen der Abschnitte Vorsprünge und/oder Einschnitte auf, welche komplementär zu Vorsprüngen und/oder Einschnitten der Außenkontur des Verschlusselements ausgebildet sind. Dadurch sind Anschläge für das Verschlusselement in der Ablassöffnung ausgebildet, welche eine Endstellung beim Einführen vorgeben. Zudem kann ein Anwender durch die Vorsprünge und/oder Einschnitte besser abschätzen, ob die Segmente des Verschlusselements in den vorgesehenen Abschnitten der Ablassöffnung angeordnet sind. Durch das zuverlässige Anordnen des Verschlusssegments in einer vorgegebenen Position kann eine zuverlässige Abdichtung der Ablassöffnung erfolgen.

Ein Dichtungselement kann als Dichtungsring ausgeführt sein und zwischen dem Dichtungsbereich des Verschlusssegments und dem korrespondierenden Dichtungsbereich des Dichtungsabschnitts der Ablassöffnung angeordnet sein. Hierbei kann der wenigstens eine Dichtungsabschnitt der Ablassöffnung einen Dichtungsbereich aufweisen, welcher als Dichtungsaufnahme oder als Dichtungsfläche ausgeführt ist. Das Verschlusssegment kann einen Dichtungsbereich aufweisen, welcher als Dichtungsaufnahme oder als Dichtungsfläche ausgeführt ist. In der wenigstens einen ersten Stellung des Verschlusselements ist der wenigstens eine Dichtungsbereich des Verschlusssegments gegenüberliegend zum wenigstens einen Dichtungsbereich des korrespondierenden Dichtungsabschnitts der Ablassöffnung angeordnet.

Die Ablassöffnung kann außermittig bei einer zylinderförmigen Ausführung des Filtergehäuseteils exzentrisch am Filtergehäuseteil angeordnet sein. Zudem kann die Ablassöffnung in Schwererichtung an einer unten liegenden Seite des Filtergehäuseteils angeordnet sein. Dadurch können die Mittelachsen der Ablassöffnung versetzt zu einer Mittelachse des Filtergehäuseteils angeordnet sein.

Das Filterelement kann mittig oder außermittig im Filtergehäuseteil angeordnet sein. Einer der in den Innenraum des Filtergehäuseteils ragenden weiteren Abschnitte des Verschlusssegments des Verschlusselements kann in die Ablassöffnung des Filterelements ragen und diese dichtend verschließen.

Gemäß einer günstigen Ausgestaltung kann eine Mittelachse der Ablassöffnung des Filterelements versetzt zur Mittelachse des Filterelements und/oder versetzt zu einer Mittelachse des Filtergehäuseteils und/oder versetzt zu wenigstens einer Mittelachse der Ablassöffnung des Filtergehäuseteils angeordnet sein. Da die Ablassöffnung des Filterelements versetzt zu wenigstens einer anderen Mittelachse des Filterelements oder des Filtergehäuseteils angeordnet ist, kann die Anzahl möglicher Ausrichtungen des Filterelements im Filtergehäuseteil reduziert werden. Dadurch kann eine Ausrichtung oder Anordnung des Filterelements im Filtergehäuseteil vorgegeben sein, wodurch Fehler beim Einbau in das Filtergehäuseteil reduziert werden können. Zudem kann verhindert werden, dass Filterelemente ohne wenigstens eine versetzt zu anderen Mittelachsen angeordneten Mittelachse in dem Filtergehäuseteil angeordnet werden. Dadurch kann ein Qualitätsstandard sichergestellt werden.

Des Weiteren können die Mittelachse der Ablassöffnung und die Mittelachse eines zweiten Abschnitts des Verschlusselements, welches im eingeführten Zustand des Ver-schlusselements in die Ablassöffnung des Filterelements ragt, deckungsgleich sein. Hierbei kann die Mittelachse des zweiten Abschnitts des Verschlusssegments versetzt zu wenigstens einer Mittelachse des Verschlusselements angeordnet sein. Durch die versetzten Achsen des Verschlusselements und der Ablassöffnung des Filterelements kann die Ausrichtung des Verschlusselements vorgegeben werden. Zudem weist das Verschlusselement weiter Vorsprünge und Einschnitte auf, welche komplementär zu Vorsprüngen und/oder Einschnitten beim Übergang zwischen Ablassöffnung des Filtergehäuseteils und der Ablassöffnung des Filterelements sind. Dadurch sind Anschläge für das Verschlusselement ausgebildet, welche eine Endstellung beim Einführen vorgeben. Zudem kann ein Anwender durch die Vorsprünge und/oder Einschnitte besser abschätzen, ob die Segmente und Abschnitte des Verschlusselements in den vorgesehenen Abschnitten der Ablassöffnung und in der Ablassöffnung des Filterelements angeordnet sind. Durch das zuverlässige Anordnen des Verschlusssegments in einer vorgegebenen Position kann eine zuverlässige Abdichtung der Ablassöffnungen erfolgen. Zudem kann das Verschlusssegment des Verschlusselements an den Übergang zwischen der Ablassöffnung des Filtergehäuseteils und die Ablassöffnung des Filterelements angepasst sein.

Gemäß einer günstigen Ausgestaltung kann ein Querschnitt der Ablassöffnung des Filterelements kleiner als wenigstens ein Querschnitt der Ablassöffnung des Filtergehäuseteils sein. Hierbei kann ein Endbereich der Ablassöffnung des Filterelements, welcher einem dem Innenraum zugewandten Endbereich der Ablassöffnung des Filtergehäuseteils zugewandt ist, über der Ablassöffnung des Filtergehäuseteils angeordnet sein, wodurch ein aus der Ablassöffnung des Filterelements strömendes Fluid in die Ablassöffnung des Filtergehäuseteils strömt. Durch den kleineren Querschnitt kann die Ablassöffnung des Filterelements als Trichter wirken.

Gemäß einer günstigen Ausgestaltung kann in der wenigstens einen ersten Stellung des Verschlusselements wenigstens ein in den Innenraum des Filtergehäuseteils ragender Abschnitt des Verschlusssegments des Verschlusselements die Ablassöffnung des Filterelements mit dem korrespondierenden Dichtungsbereich abdichten. Hierbei können zwei Ablassöffnungen gleichzeitig von einem Verschlusselement verschlossen und abgedichtet werden. In einer weiteren Stellung kann das Verschlusselement die Ablassöffnung des Filterelements zumindest teilweise freigeben und die Ablassöffnung des Filtergehäuseteils weiterhin dichtend verschließen. Optional kann das Verschlusselement in einer weiteren Stellung die Ablassöffnung des Filterelements verschließen und die Ablassöffnung des Filtergehäuseteils zumindest teilweise freigeben.

Gemäß einer günstigen Ausgestaltung kann das Filterelement lösbar über eine Befestigungsanordnung am Filtergehäuseteil befestigt sein, wobei die Befestigungsanordnung filterelementseitige Befestigungselemente und mit diesen zusammenwirkende gehäuseteilseitige Befestigungselemente aufweist. Die Verteilung der Befestigungselemente am Filterelement kann lediglich durch die Position der Befestigungselemente am Filtergehäuseteil, mit welchen diese eine Verbindung ausbilden, beschränkt sein. Hierbei können Paare aus filterelementseitigen Befestigungselementen und gehäuseteilseitigen Befestigungselementen gebildet werden. Wie die Paare zueinander angeordnet sind, kann je nach Bauraum oder in Abhängigkeit von anderen Faktoren frei gewählt werden. Durch die Befestigungsanordnung kann das Filterelement sicher im Filtergehäuseteil gehalten werden, wodurch im Betrieb oder beim Transport oder beim Einführen des Verschlusselements ein Verrutschen des Filterelements erschwert werden kann, wodurch die Zuverlässigkeit des Filtersystems verbessert werden kann.

Gemäß einer günstigen Ausgestaltung kann eine Gehäusewand des Filtergehäuseteils Führungselemente umfassen, welche Führungselemente des Filterelements führen. Durch die Führung des Filterelements in eine Endstellung können am Filterelement angeordnete Befestigungselemente und an dem Filtergehäuseteil angeordnete Befestigungselemente zusammengeführt werden. Die Ablassöffnung des Filterelements kann in der Endstellung des Filterelements mit der Ablassöffnung des Filtergehäuseteils fluidisch gekoppelt sein. Hierbei können die Führungselemente derart ausgebildet sein, dass das Filterelement nur mit einer bestimmten Ausrichtung in das Filtergehäuseteil eingeführt werden kann. Beispielsweise kann ein Führungselement am Filtergehäuseteil und ein Führungselement am Filterelement breiter als andere Führungselemente ausgeführt sein.

Nach einem weiteren Aspekt der Erfindung wird eine Verwendung eines Filterelements in einem Filtersystem vorgeschlagen, wobei das Filterelement in einen Innenraum eines Filtergehäuseteils eingeführt wird und so zu dem Filtergehäuseteil ausgerichtet wird, dass wenigstens eine Mittelachse eines Eingriffsabschnitts des Filterelements versetzt zu wenigstens einer Mittelachse einer Ablassöffnung des Filtergehäuseteils angeordnet ist. Wenn es sich bei dem Eingriffsabschnitt des Filterelements um eine Ablassöffnung handelt, können die Ablassöffnungen fluidisch miteinander gekoppelt sein. Ein Verschlusselement mit wenigstens zwei Mittelachsen kann hierbei in wenigstens einer ersten Stellung beide Ablassöffnungen dichtend verschließen.

Gemäß einer günstigen Ausgestaltung kann das Filterelement so zum Filtergehäuseteil ausgerichtet werden, dass filterelementseitige Befestigungselemente und gehäuseteilseitige Befestigungselemente eine lösbare Befestigung des Filterelements am Filtergehäuseteil ausbilden. Durch die aus filterelementseitigen Befestigungselementen und gehäuseteilseitigen Befestigungselementen gebildete Befestigungsanordnung, kann das Filterelement zuverlässig im Filtergehäuseteil fixiert werden.

Nach einem weiteren Aspekt der Erfindung wird eine Verwendung eines Verschlusselements in einem Filtersystem beschrieben, wobei das Verschlusselement in eine Ablassöffnung eines Filtergehäuseteils eingeführt wird. Wenigstens ein erster Abschnitt eines Verschlusssegments ragt in wenigstens einen Dichtungsabschnitt der Ablassöffnung. Wenigstens ein Dichtungsbereich des Verschlusssegments, wenigstens ein Dichtungsbereich des Dichtungsabschnitts der Ablassöffnung und wenigstens ein Dichtungselement dichten die Ablassöffnung im korrespondierenden Dichtungsabschnitt ab. Eine Mittelachse eines ersten Abschnitts ist deckungsgleich zu einer Mittelachse des Dichtungsabschnitts angeordnet. Ein Verbindungselement eines Verbindungssegments des Verschlusselements bildet mit einem Verbindungselement eines Verbindungsabschnitts der Ablassöffnung eine lösbare Verbindung aus, wobei eine Mittelachse des Verbindungssegments deckungsgleich zu einer Mittelachse des Verbindungsabschnitts angeordnet ist. Durch die versetzten Mittelachsen der Ablassöffnung und des Verschlusselements kann ein Anwender das Verschlusselement einfach ausrichten und in die vorgegebene erste Stellung überführen. Zudem können die Anschläge am Verschlusselement und an der Ablassöffnung eine haptische Rückmeldung über das Erreichen einer ersten Endstellung liefern.

Gemäß einer günstigen Ausgestaltung kann wenigstens ein zweiter Abschnitt des Verschlusssegments in einen Eingriffsabschnitt eines Filterelements ragen. Dabei ist eine Mittelachse des zweiten Abschnitts des Verschlusssegments deckungsgleich zu einer Mittelachse des Eingriffsabschnitts des Filterelements angeordnet.

In einer bevorzugten Weiterbildung der Verwendung des Verschlusselements ist es möglich, dass wenigstens ein zweiter Abschnitt des Verschlusssegments in eine Ablassöffnung eines Filterelements ragt. Hierbei dichten ein korrespondierender Dichtungsbereich der Ablassöffnung des Filterelements, der wenigstens eine Dichtungsbereich des zweiten Abschnitts des Verschlusssegments und wenigstens ein Dichtungselement die Ablassöffnung ab. Eine Mittelachse des zweiten Abschnitts des Verschlusssegments ist hierbei deckungsgleich zu einer Mittelachse der Ablassöffnung angeordnet.

Durch eine solche Ausgestaltung des Verschlusssegments können Filterelement und Filtersystem vorteilhaft abgedichtet werden. Das Filterelement kann zuverlässig in dem Filtergehäuseteil des Filtersystems fixiert sein.

Da es sich bei den Gegenständen Verschlusselement für wenigstens eine Ablassöffnung eines Filtersystems, Filtergehäuseteil eines Filtersystems, Filterelement, Filtersystem, Verwendung eines Filterelements und Verwendung eines Verschlusselements in einem Filtersystem um eine einheitliche Erfindung handelt, können Merkmale, die zu einem oder mehreren der Gegenstände offenbart sind, einzeln oder in Gruppen mit anderen erfindungsgemäßen Gegenständen kombiniert werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine Seitenansicht eines Verschlusselements nach einem ersten Ausführungsbeispiel der Erfindung;
- Figur 2: eine Schnittdarstellung des Verschlusselements nach Figur 1;
- Figur 3: eine perspektivische Ansicht des Verschlusselements nach Figur 1 und 2;
- Figur 4: eine Schnittdarstellung eines unteren Bereichs eines Filtersystems mit einem Verschlusselement nach Figuren 1 bis 3;
- Figur 5: eine Seitenansicht eines Verschlusselements nach einem zweiten Ausführungsbeispiel der Erfindung;
- Figur 6: eine Schnittdarstellung des Verschlusselements nach Figur 5;
- Figur 7: eine perspektivische Ansicht des Verschlusselements nach Figur 5 und 6;
- Figur 8: eine Schnittdarstellung eines unteren Bereichs eines Filtersystems mit einem Verschlusselement nach Figuren 5 bis 7;
- Figur 9: eine Seitenansicht eines Verschlusselements nach einem dritten Ausführungsbeispiel der Erfindung;
- Figur 10: eine Schnittdarstellung des Verschlusselements nach Figur 9;
- Figur 11: eine perspektivische Ansicht des Verschlusselements nach Figur 9 und 10;
- Figur 12: eine Schnittdarstellung eines unteren Bereichs eines Filtersystems mit einem Verschlusselement nach Figuren 9 bis 11;
- Figur 13: eine Seitenansicht eines Verbindungssegments eines Verschlusselements nach einem vierten Ausführungsbeispiel der Erfindung;
- Figur 14: eine Schnittdarstellung eines unteren Bereichs eines Filtersystems mit einem Verschlusselement nach Figur 13;
- Figur 15: eine Seitenansicht eines Verbindungssegments eines Verschlusselements nach einem fünften Ausführungsbeispiel der Erfindung;
- Figur 16: eine Schnittdarstellung eines unteren Bereichs eines Filtersystems mit einem Verschlusselement nach Figur 15;
- Figur 17: eine Schnittdarstellung eines unteren Bereichs eines Filtersystems mit einem Verschlusselement nach einem sechsten Ausführungsbeispiel der Erfindung;
- Figur 18: eine weitere Schnittdarstellung des Filtersystems nach Figur 17 entlang der Schnittlinie XVIII;
- Figur 19: eine Schnittdarstellung eines unteren Bereichs eines Filtersystems mit einem Verschlusselement nach einem siebten Ausführungsbeispiel der Erfindung;
- Figur 20: eine Schnittdarstellung eines unteren Bereichs eines Filtersystems mit einem Verschlusselement nach einem achten Ausführungsbeispiel der Erfindung,
- Figur 21: eine Seitenansicht eines Filtergehäuseteils nach einem Ausführungsbeispiel der Erfindung;
- Figur 22: Eine Schnittdarstellung eines Filtersystems mit einem Filtergehäuseteil nach Figur 21 entlang der Schnittlinie XXII;
- Figur 23: eine perspektivische Schnittdarstellung eines Filtergehäuseteils nach einem Ausführungsbeispiel der Erfindung;
- Figur 24: eine perspektivische Ansicht eines Teils eines Filterelements nach einem Ausführungsbeispiel der Erfindung;
- Figur 25: eine perspektivische Schnittdarstellung eines Filtersystems mit einem Filtergehäuseteil nach Figur 23 und einem Teil eines Filterelements nach Figur 24 in einer zwischen Stellung und einem Verschlusselement nach Figur 17;
- Figur 26: eine perspektivische Schnittdarstellung eines Filtersystems mit einem Filtergehäuseteil nach Figur 23 und einem Teil eines Filterelements nach Figur 24 in einer Endstellung und einem Verschlusselement nach Figur 17;
- Figur 27: eine perspektivische Schnittdarstellung eines Filtersystems mit einem Filtergehäuseteil nach einem Ausführungsbeispiel der Erfindung und einem Teil eines Filterelements nach einem Ausführungsbeispiel der Erfindung in einer zwischen Stellung und einem Verschlusselement nach Figur 17;
- Figur 28: eine perspektivische Schnittdarstellung eines Filtersystems mit einem Filtergehäuseteil nach einem Ausführungsbeispiel der Erfindung und einem Teil eines Filterelements nach einem Ausführungsbeispiel der Erfindung in einer zwischen Stellung und einem Verschlusselement nach Figur 17;
- Figur 29: eine perspektivische Schnittdarstellung eines Filtersystems mit einem Filtergehäuseteil nach einem Ausführungsbeispiel der Erfindung und einem Teil eines Filterelements nach einem Ausführungsbeispiel der Erfindung in einer zwischen Stellung und einem Verschlusselement nach Figur 17.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

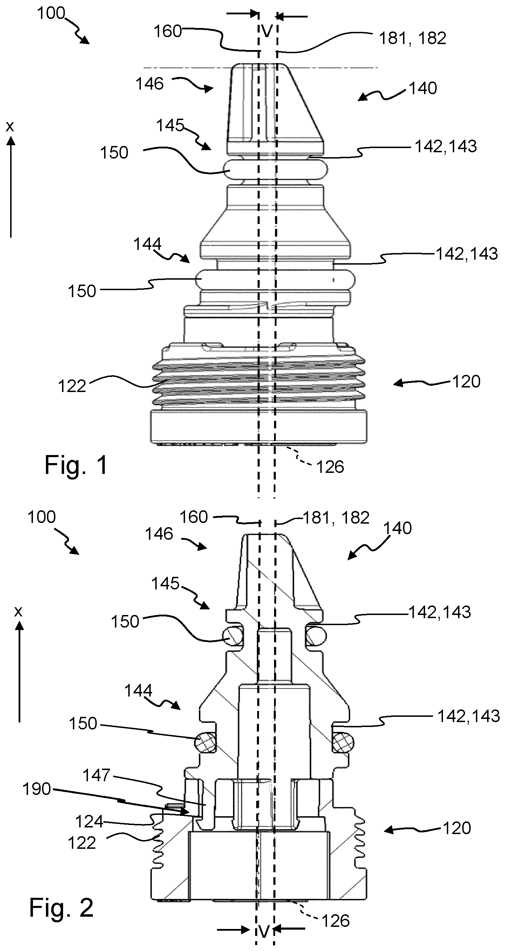

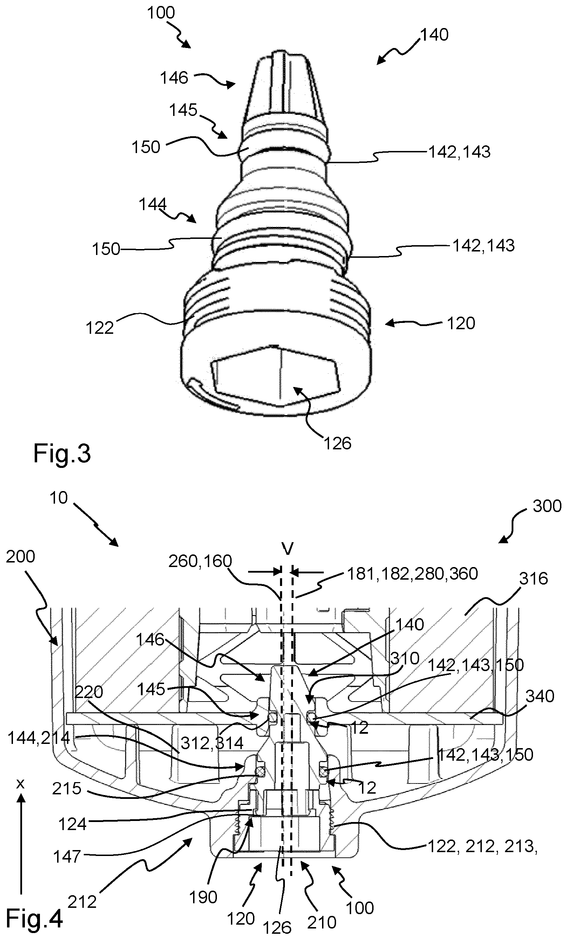

Zur Erläuterung der Erfindung zeigen Figuren 1 bis 3 verschiedene Darstellungen eines ersten Ausführungsbeispiels eines Verschlusselements 100. Figur 4 zeigt eine Schnittdarstellung eines unteren Bereichs eines Filtersystems 10 mit einem solchen Verschlusselement 100, einem Filtergehäuseteil 200 und einem Filterelement 300.

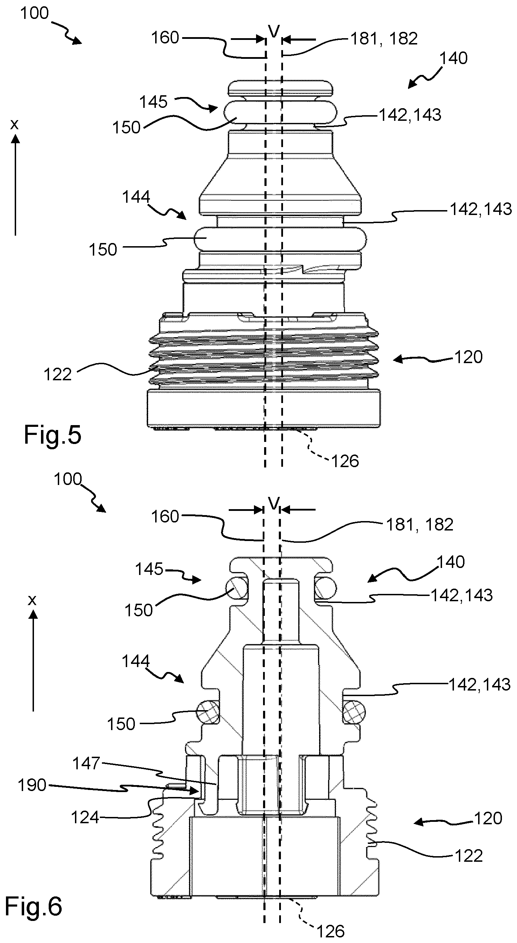

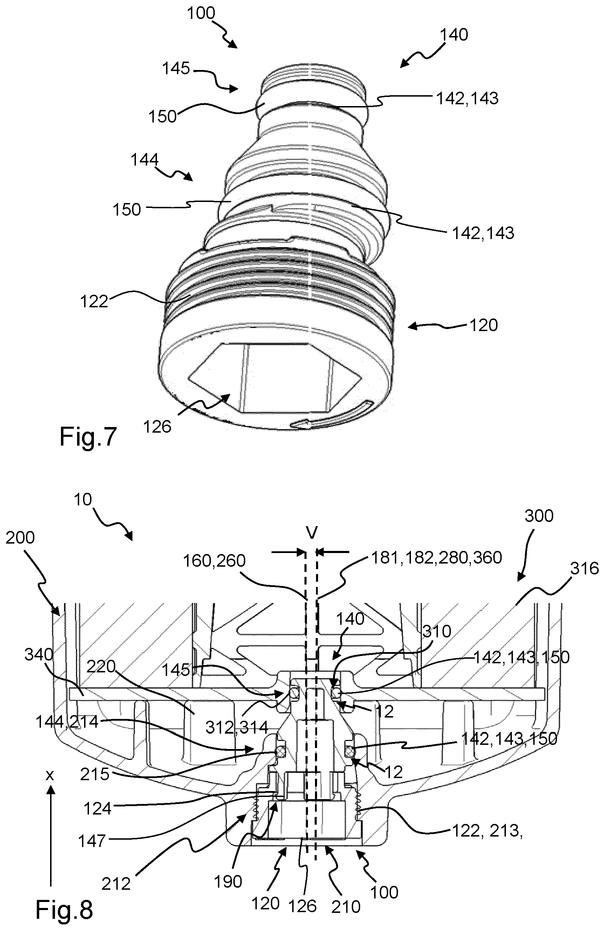

Figuren 5 bis 7 zeigen verschiedene Darstellungen eines zweiten Ausführungsbeispiels eines Verschlusselements 100. Figur 8 zeigt eine Schnittdarstellung eines unteren Bereichs eines Filtersystems 10 mit einem solchen Verschlusselement 100, einem Filtergehäuseteil 200 und einem Filterelement 300.

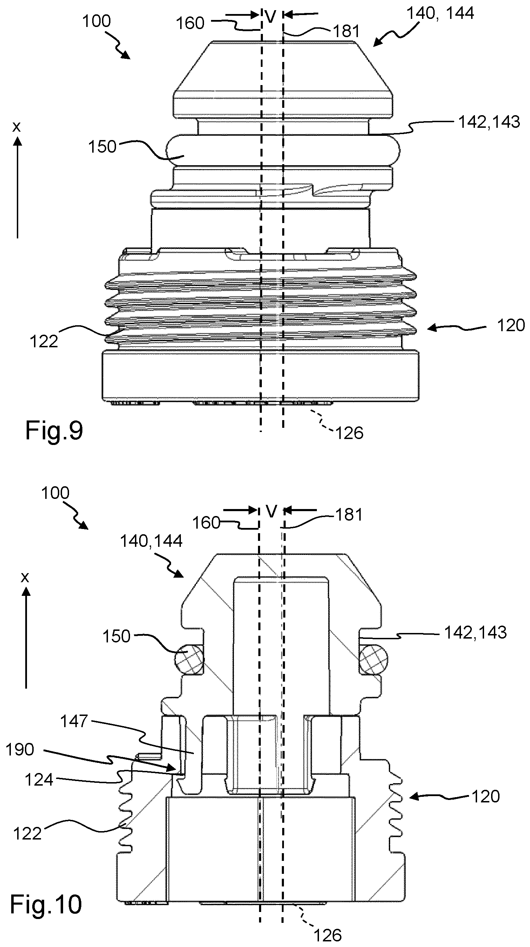

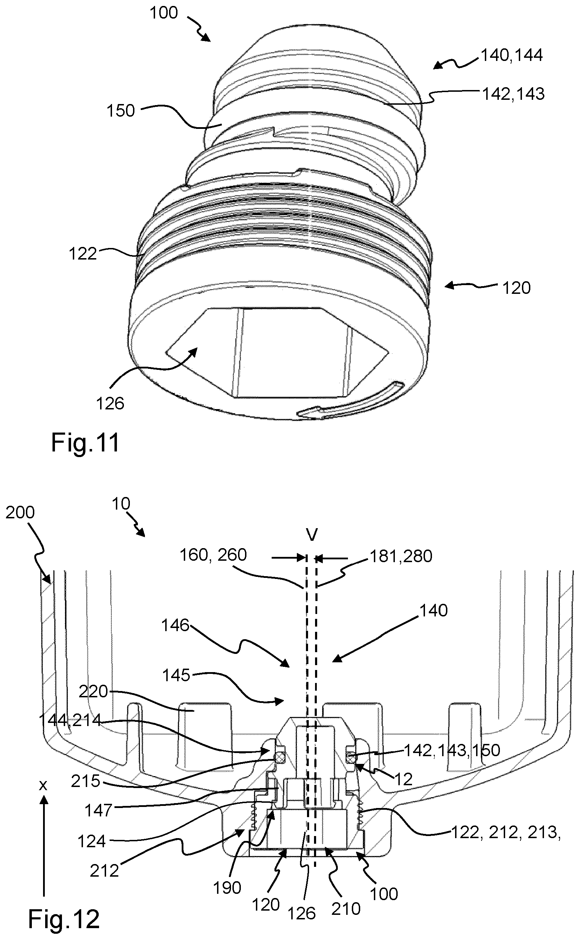

Figuren 9 bis 11 zeigen verschiedene Darstellungen eines dritten Ausführungsbeispiels eines Verschlusselements 100. Figur 12 zeigt eine Schnittdarstellung eines unteren Bereichs eines Filtersystems 10 mit einem solchen Verschlusselement 100 und einem Filtergehäuseteil 200.

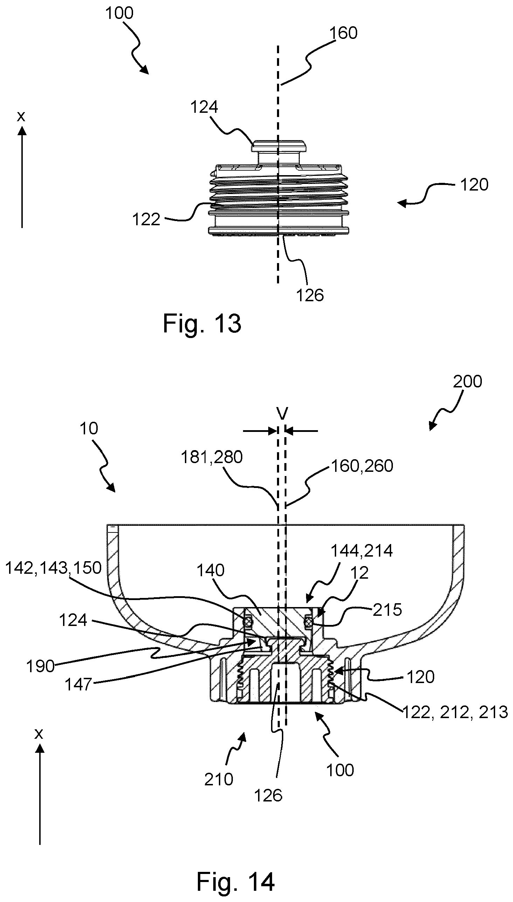

Figur 13 zeigt eine Seitenansicht eines Verbindungssegments 120 eines vierten Ausführungsbeispiels eines Verschlusselements 100. Figur 14 zeigt eine Schnittdarstellung eines unteren Bereichs eines Filtersystems 10 mit einem solchen Verschlusselement 100 und einem Filtergehäuseteil 200.

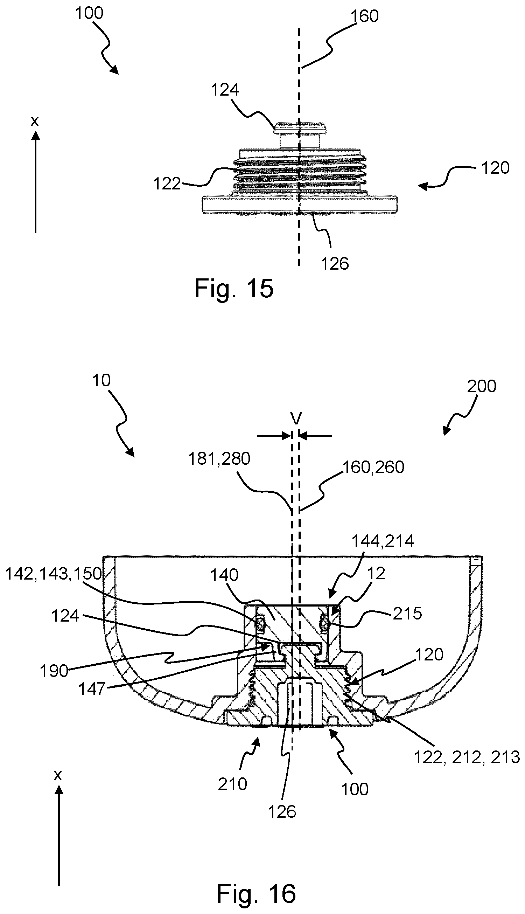

Figur 15 zeigt eine Seitenansicht eines Verbindungssegments 120 eines fünften Ausführungsbeispiels eines Verschlusselements 100. Figur 16 zeigt eine Schnittdarstellung eines unteren Bereichs eines Filtersystems 10 mit einem solchen Verschlusselement 100 und einem Filtergehäuseteil 200,

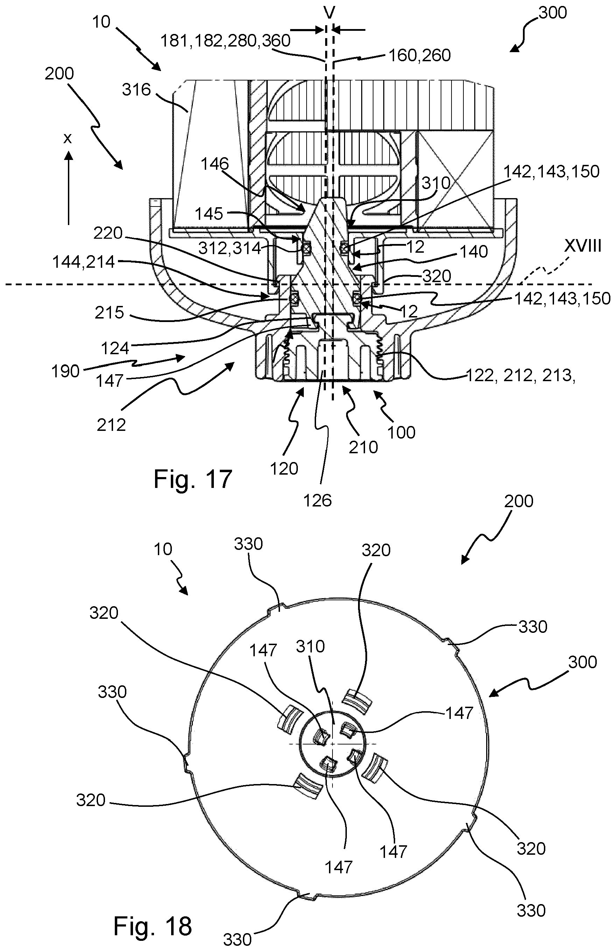

Figur 17 zeigt eine Schnittdarstellung eines unteren Bereichs eines Ausführungsbeispiels eines Filtersystems 10 mit einem sechsten Ausführungsbeispiel eines Verschlusselements 100, einem Filtergehäuseteil 200 und einem Filterelement 300. Figur 18 zeigt eine weitere Schnittdarstellung dieses Filtersystems 10 entlang der Schnittlinie XVIII.

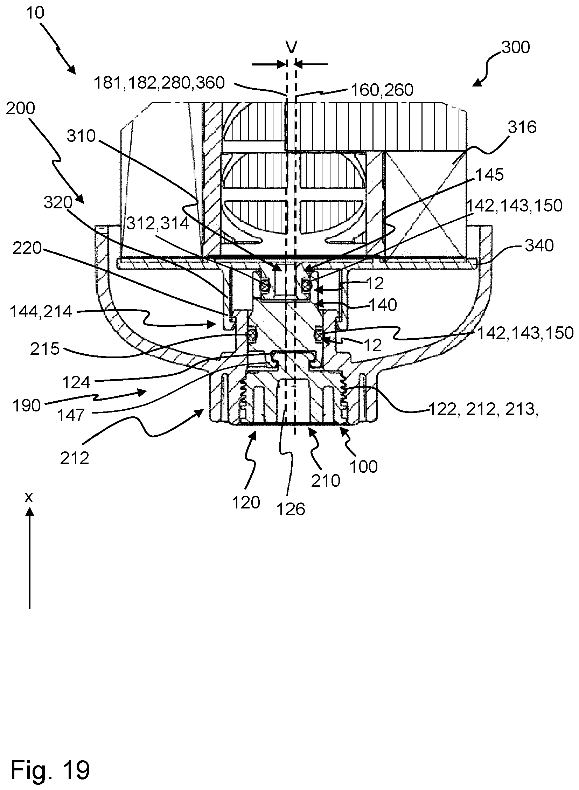

Figur 19 zeigt eine Schnittdarstellung eines unteren Bereichs eines Ausführungsbeispiels eines Filtersystems 10 mit einem siebten Ausführungsbeispiel eines Verschlusselements 100, einem Filtergehäuseteil 200 und einem Filterelement 300.

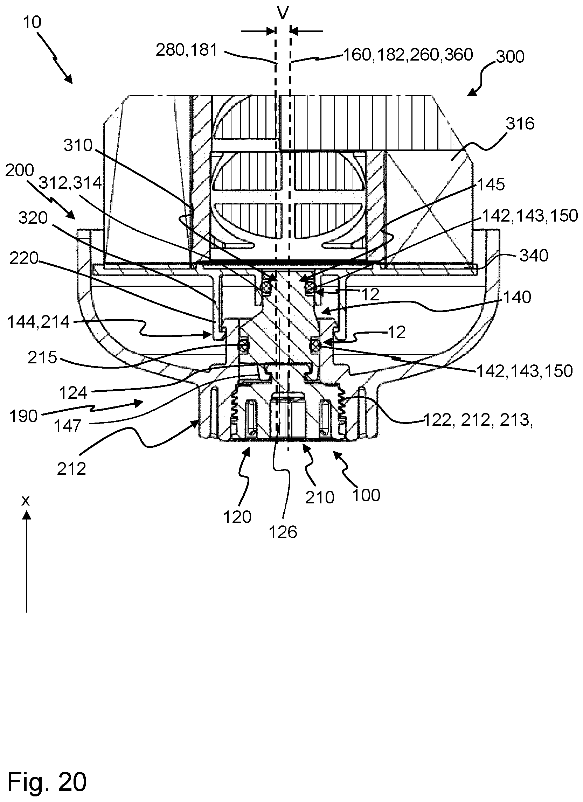

Figur 20 zeigt eine Schnittdarstellung eines unteren Bereichs eines Ausführungsbeispiels eines Filtersystems 10 mit einem achten Ausführungsbeispiel eines Verschlusselements 100, einem Filtergehäuseteil 200 und einem Filterelement 300.

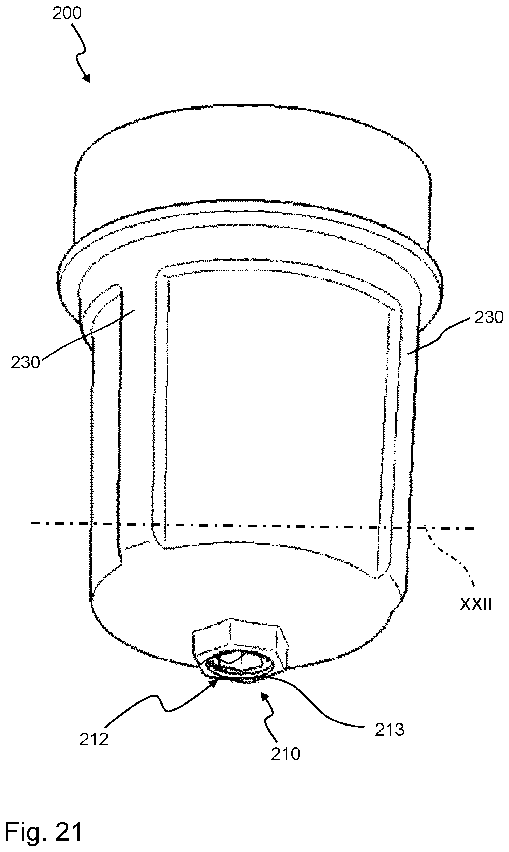

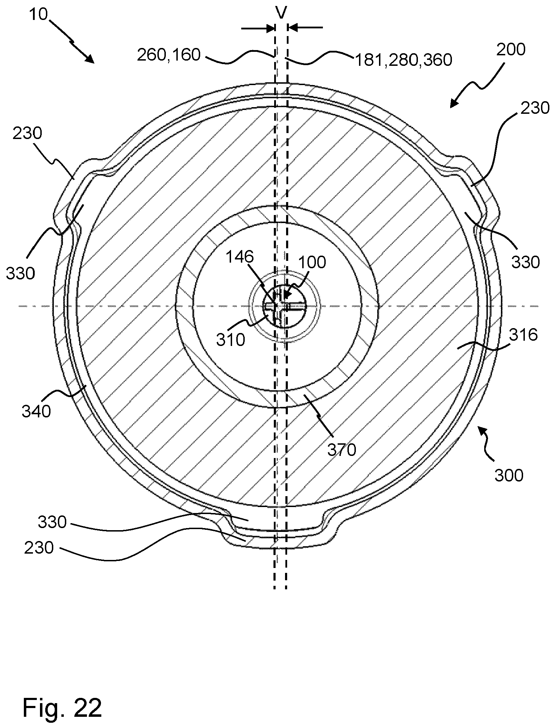

Figur 21 zeigt eine Seitenansicht eines Ausführungsbeispiels des Filtergehäuseteils 200 und Figur 22 zeigt eine Schnittdarstellung eines Filtersystems 10 mit einem solchen Filtergehäuseteil 200 und einem Filterelement 300 entlang der Schnittlinie XXII.

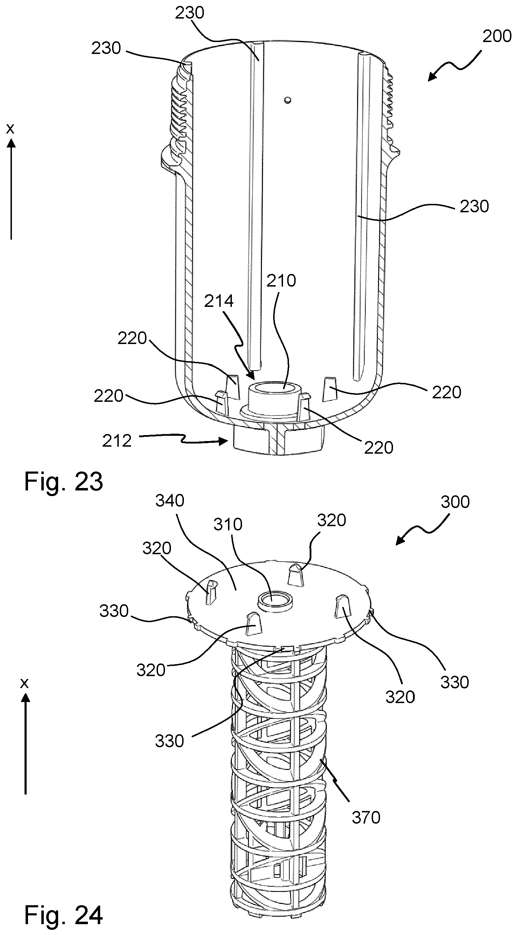

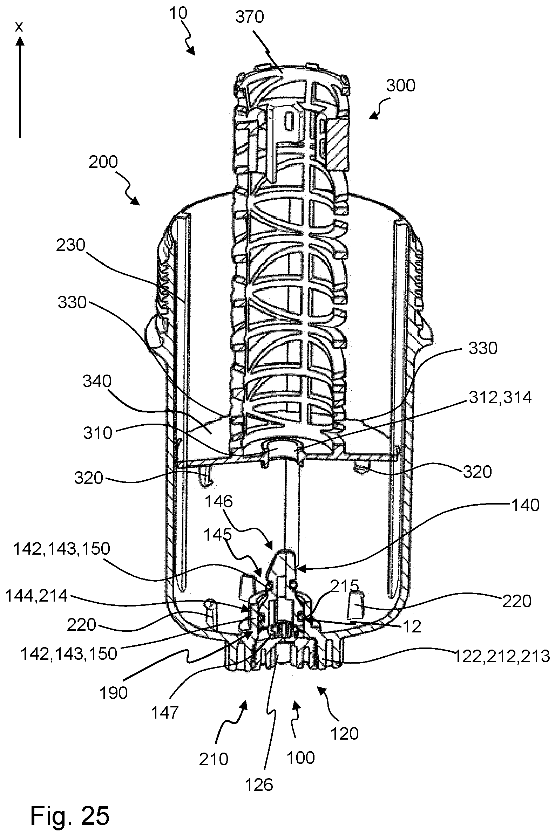

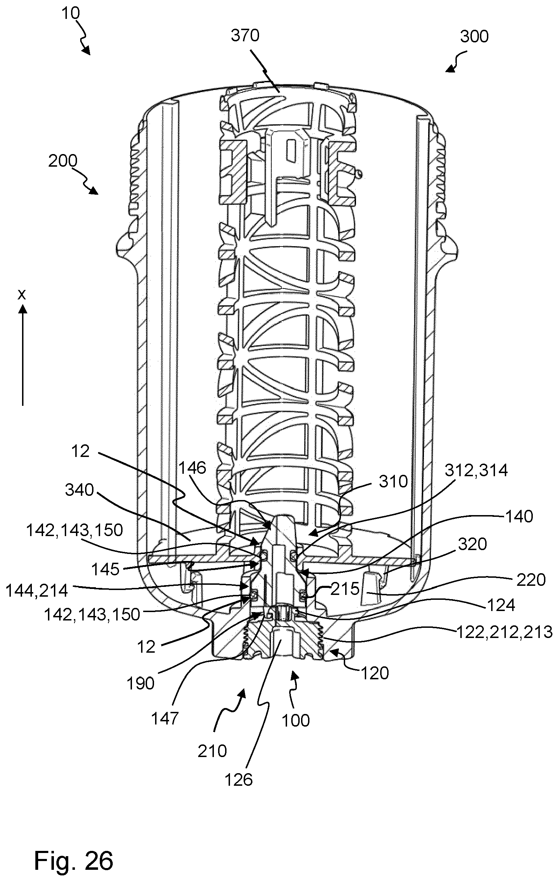

Figur 23 zeigt eine perspektivische Schnittdarstellung eines weiteren Ausführungsbeispiels eines Filtergehäuseteils 200. Figur 24 zeigt eine perspektivische Ansicht eines Teils eines Filterelements 300. Figur 25 zeigt eine perspektivische Schnittdarstellung eines Ausführungsbeispiels eines Filtersystems 10 mit einem solchen Filtergehäuseteil, einem solchen Filterelement 300 in einer zwischen Stellung und dem sechsten Ausführungsbeispiel des Verschlusselements 100. Figur 26 zeigt das Filtersystem 10 mit dem Filterelement 300 in einer Endstellung.

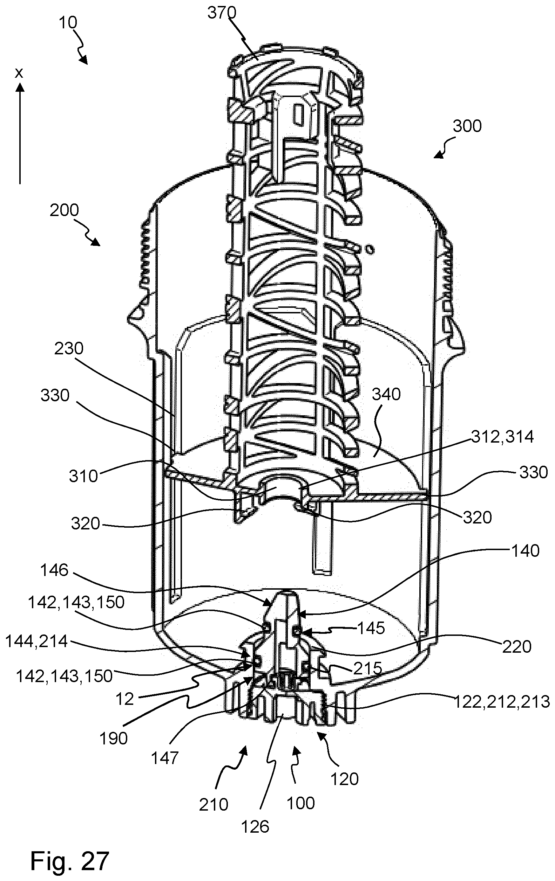

Figur 27 zeigt eine perspektivische Schnittdarstellung eines Ausführungsbeispiels eines Filtersystems 10 mit einem weiteren Ausführungsbeispiel eines Filtergehäuseteils 200, einem weiteren Ausführungsbeispiel eines Filterelements 300 in einer Zwischenstellung und dem sechsten Ausführungsbeispiel des Verschlusselements 100.

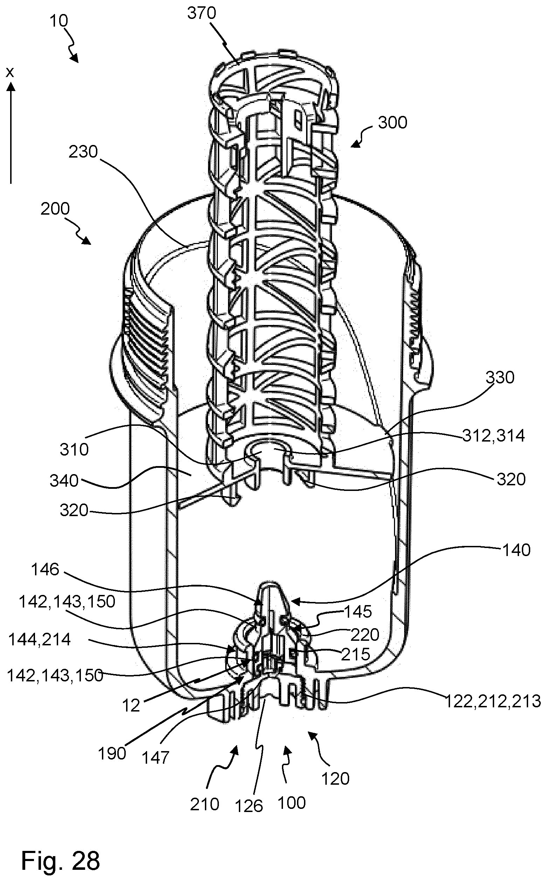

Figur 28 zeigt eine perspektivische Schnittdarstellung eines Ausführungsbeispiels eines Filtersystems 10 mit einem weiteren Ausführungsbeispiel eines Filtergehäuseteils 200, einem weiteren Ausführungsbeispiel eines Filterelements 300 in einer Zwischenstellung und dem sechsten Ausführungsbeispiel des Verschlusselements 100.

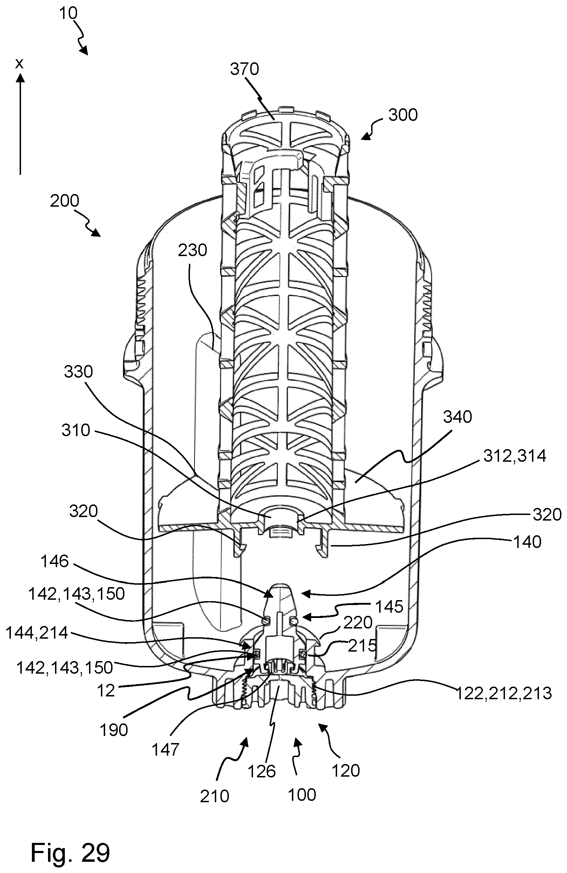

Figur 29 zeigt eine perspektivische Schnittdarstellung eines Ausführungsbeispiels eines Filtersystems 10 mit einem weiteren Ausführungsbeispiel eines Filtergehäuseteils 200, einem weiteren Ausführungsbeispiel eines Filterelements 300 in einer Zwischenstellung und dem sechsten Ausführungsbeispiel des Verschlusselements 100.

Zunächst werden die Gemeinsamkeiten der verschiedenen Ausführungsbeispiele des Verschlusselementes 100 beschrieben. Im weiteren Verlauf wird auf die Unterschiede in den Ausführungsbeispielen eingegangen.

Wie aus Figuren 1 bis 17, 19, 20 und 25 bis 28 ersichtlich ist, umfasst das Verschlusselement 100 für wenigstens eine Ablassöffnung 210, 310 eines Filtersystems 10 ein Verbindungssegment 120 und ein daran in Längsrichtung x anschließendes Verschlusssegment 140, welches wenigstens einen Dichtungsbereich 142 aufweist. Das Verbindungssegment 120 und das Verschlusssegment 140 weisen jeweils wenigstens eine in Längsrichtung x verlaufende Mittelachse 160, 181, 182 auf, wobei wenigstens eine der Mittelachsen 181, 182 des Verschlusssegments 140 versetzt zu wenigstens einer der Mittelachsen 160 des Verbindungssegments 120 angeordnet ist. Das Verschlusselement 100 kann in einem nicht dargestellten Ausführungsbeispiel einteilig ausgeführt sein. Hierbei können das Verbindungssegment 120 und Verschlusssegment 140 starr bzw. fest miteinander verbunden sein. In den dargestellten Ausführungsbeispielen sind das Verbindungssegment 120 und das Verschlusssegment 140 über eine geeignete Kopplungsanordnung 190 miteinander gekoppelt.

Wie aus Figuren 1 bis 17, 19, 20 und 25 bis 28 weiter ersichtlich ist, ist das Verbindungssegment 120 in den dargestellten Ausführungsbeispielen drehbar am Verschlusssegment 140 gelagert. Hierbei weist eine Kopplungsanordnung 190 als Rasthaken ausgeführte Kopplungselemente 147 und als Kanten ausgeführte Kopplungselemente 124 auf, wobei die Rasthaken mit den Kanten zusammenwirken, wobei durch den Eingriff der Rasthaken an den Kanten eine Rotation um eine in Längsrichtung x verlaufene Achse möglich ist. Eine Bewegung eines Segments 120, 140 in axialer Richtung ist ohne das mit ihm gekoppelte Segment nicht (oder nur in dem Maße, in dem die Segmente Spiel zueinander haben) möglich. Es sind auch andere geeignete Kopplungsanordnungen 190 vorstellbar.

Wie aus Figuren 1 bis 17, 19, 20 und 25 bis 28 weiter ersichtlich ist, ist in den dargestellten Ausführungsbeispielen das Verbindungssegment 120 in Längsrichtung x vor dem Verschlusssegment 140 angeordnet. Zudem ist der größte Durchmesser des Verschlusssegments 140 kleiner als der kleinste Durchmesser des Verbindungssegments 120. Dadurch ragt das Verbindungssegment 120 über das Verschlusssegment 140 heraus. Das Verschlusssegment 140 ragt in keinem Abschnitt 144, 145, 146 über das Verbindungssegment 120 hinaus. In einem alternativen nicht dargestellten Ausführungsbeispiel ist auch eine andere Anordnung der Segmente 120, 140 vorstellbar. Zudem kann das Verschlusselement 100 in einem weiteren nicht dargestellten Ausführungsbeispiel weitere Segmente 120, 140 aufweisen. Durch den Achsenversatz v kann das Verschlusselement 100 nur in eine Ablassöffnung 210, 310 eingeführt werden, deren Querschnitt in dem Bereich, in dem das Verschlusssegment 140 anordenbar ist, um den Achsenversatz v größer ist, als der Querschnitt des Verschlusssegments 140 oder welche ebenfalls den Achsenversatz v aufweist.

Wie aus Figuren 4, 8, 12, 14, 16, 17, 18, 19, 20, 21, 23, 25, 26, 27, 28 und 29 ersichtlich ist, ist eine Außenkontur des Verbindungssegments 120 zumindest teilweise an eine Innenkontur eines Verbindungsabschnitts 212 der korrespondierenden Ablassöffnung 210 angepasst, welche das Verschlusselement 100 in wenigstens einer ersten Stellung dichtend verschließt. In den dargestellten Ausführungsbeispielen des Verschlusselements 100 weisen die Verbindungssegmente 120 einen runden Querschnitt auf. Die Verbindungsabschnitte 212 der korrespondierenden dargestellten Ablassöffnungen 210 weisen ebenfalls runde Querschnitte auf. Es sind aber auch andere geeignete Formen der Querschnitte vorstellbar.

Wie aus Figuren 4, 8, 12, 14, 16, 17, 18, 19, 20, 21, 23, 25, 26, 27, 28 und 29 weiter ersichtlich ist, ist eine Außenkontur eines ersten Abschnitts 144 des Verschlusssegments 140 zumindest teilweise an eine Innenkontur eines Dichtungsabschnittes 214 der korrespondierenden Ablassöffnung 210 angepasst. In den dargestellten Ausführungsbeispielen des Verschlusselements 100 weisen die Verschlusssegmente 140 einen runden Querschnitt auf. Es sind aber auch andere geeignete Formen vorstellbar. Zudem können die Abschnitte 144, 145, 146 des Verschlusssegments 140 unterschiedlich geformte Querschnitte aufweisen. Die Dichtungsabschnitte 214, 312 der korrespondierenden dargestellten Ablassöffnungen 210, 310 weisen ebenfalls runde Querschnitte auf. Es sind aber auch andere geeignete Formen vorstellbar.

Wie aus Figuren 4, 8, 12, 14, 16, 17, 18, 19, 20, 21, 23, 25, 26, 27, 28 und 29 weiter ersichtlich ist, weisen die dargestellten Ausführungsbeispiele des Verschlusselementes 100 jeweils nur ein Verbindungssegment 120 auf, welches wenigstens ein Verbindungselement 122 aufweist, welches komplementär zu einem Verbindungselement 213 der Ablassöffnung 210 ausgebildet ist. In den dargestellten Ausführungsbeispielen entspricht das Verbindungselement 122 einem Außengewinde, welches in das korrespondierende als Innengewinde ausgeführte Verbindungselement 213 der Ablassöffnung 210 einschraubbar ist. Durch die drehbare Lagerung des Verbindungssegments 120 am Verschlusssegment 140 wird die Drehbewegung beim Einschrauben des Verbindungssegments 120 nicht oder kaum auf das Verschlusssegment 140 übertragen. Durch die Kopplungsanordnung 190 wird die Bewegung in Längsrichtung x auf das Verschlusssegment 140 übertragen, sodass das Verschlusssegment 140 in Längsrichtung x in Richtung des korrespondierenden Dichtungsabschnitts 214, 312 bewegt werden kann. In einem alternativen, nicht dargestellten Ausführungsbeispiel kann anstelle der Schraubverbindung auch eine andere geeignete Verbindung das Verbindungssegment 120 mit dem Verbindungsabschnitt 212 verbinden. Vorstellbar ist eine Bajonettverbindung, eine Clipverbindung, eine Schnappverbindung, eine Rastverbindung oder eine Klemmverbindung. Hierbei können entsprechende Verbindungselemente 122, 213 am Verbindungssegment 120 und am Verbindungsabschnitt 212 angeordnet sein. Zudem können verschiedene Verbindungsarten miteinander kombiniert werden.

Wie aus Figuren 1 bis 17, 19, 20 und 25 bis 28 weiter ersichtlich ist, weist das Verbindungssegment 120 an einem Endbereich wenigstens ein Betätigungselement 126 zur Einleitung eines Betätigungsmoments auf. Das Betätigungselement 126 ist an dem Verschlusssegment 140 abgewandten Endbereich angeordnet. Wie aus Figuren 3, 7 und 11 weiter ersichtlich ist, ist das Betätigungselement 126 in den dargestellten Ausführungsbeispielen als Eingriffskontur für einen Sechskantschlüssel ausgeführt. Durch den Sechskantschlüssel kann ein Drehmoment über das Betätigungselement 126 auf das Verbindungssegment 120 übertragen und das Einschrauben erleichtert werden. Es sind aber auch andere Ausgestaltungen des Betätigungselements 126 vorstellbar.

Wie aus Figuren 1 bis 4 weiter ersichtlich ist, weist das Verschlusselement 100 im dargestellten ersten Ausführungsbeispiel ein Verschlusssegment 140 mit drei Abschnitten 144, 145, 146 auf. Zwei der drei Abschnitte 144, 145 weisen jeweils wenigstens einen Dichtungsbereich 142 und eine Mittelachse 181, 182 auf. Hierbei ist der erste Abschnitt 144 ausgelegt, um mit wenigstens einem Dichtungselement 150 und einem Dichtungsabschnitt 214 der Ablassöffnung 210 des Filtergehäuseteils 200 eine Dichtungsanordnung 12 auszubilden. Der zweite Abschnitt 145 ist ausgelegt, um mit wenigstens einem Dichtungselement 150 und einem Dichtungsabschnitt 312 der Ablassöffnung 310 eines Filterelements 300 eine Dichtungsanordnung 12 auszubilden. Die Dichtungsbereiche 142 sind in Längsrichtung beabstandet zueinander angeordnet.

Die Dichtungsbereiche 142 der Abschnitte 144, 145 weisen jeweils eine als Dichtungsnut ausgeführte Dichtungsaufnahme 143 auf, welche den jeweiligen Abschnitt 144, 145 umschließt. Die Dichtungsbereiche 142 sind dazu ausgelegt, jeweils ein Dichtungselement 150 aufzunehmen. In einem alternativen, nicht dargestellten Ausführungsbeispiel können die Dichtungselemente 150 auch in einer Dichtungsaufnahme im Dichtungsbereich 215, 314 des Dichtungsabschnitts 214, 312 der Ablassöffnung 210, 310 aufgenommen sein. In einem weiteren alternativen Ausführungsbeispiel können die Dichtungsbereiche 142 auch mehrere Dichtungselemente 150 aufnehmen. Beispielsweise können die Dichtungsbereiche 142 eine Dichtungsfläche aufweisen, an welcher mehrere Dichtungselemente 150 anliegen können. Zudem können die Dichtungsbereiche 142 mehrere Dichtungsaufnahmen 143 aufweisen. Zudem können die Dichtungsbereiche 142 der Abschnitte 144, 145 unterschiedlich ausgeführt sein.

Im dargestellten Ausführungsbeispiel sind der erste Abschnitt 144 und der zweite Abschnitt 145 im Wesentlichen rotationssymmetrisch zur jeweiligen Mittelachse 181, 182 angeordnet. Insbesondere die Dichtungsaufnahmen 143 sind rotationssymmetrisch zur jeweiligen Mittelachse 181, 182 angeordnet. Die Mittelachsen 181, 182 verlaufen im dargestellten Ausführungsbeispiel deckungsgleich in Längsrichtung x. Dadurch sind die Dichtungsaufnahmen 143 der Abschnitte 144, 145 koaxial zueinander angeordnet. Die Mittelachsen 181, 182 sind versetzt zu einer Mittelachse 160 des Verbindungssegment 120 angeordnet. Dadurch sind die Dichtungsaufnahmen 143 der Abschnitte 144, 145 exzentrisch zum Verbindungssegment 120 angeordnet. Hierbei sind die Mittelachsen 181, 182 des Verschlusssegments 140 um 0,5 mm versetzt zur Mittelachse 160 des Verbindungssegments angeordnet. Zudem weist das Verbindungssegment 120 einen größeren Durchmesser auf als der erste Abschnitt 144 des Verschlusssegment 140 und der erste Abschnitt 144 des Verschlusssegments 140 weist einen größeren Durchmesser auf als der zweite Abschnitt 145 des Verschlusssegments 140. Der dritte Abschnitt 146 des Verschlusssegments 140 weist wenigstens eine Abschrägung auf. Dadurch verkleinert sich der Durchmesser des dritten Abschnitts 146 in Längsrichtung x kontinuierlich. Zudem weist die Stirnfläche des dritten Abschnitts 146 eine Mittelachse auf, welche deckungsgleich zur Mittelachse 160 des Verbindungssegments 120 angeordnet ist. Die Abschrägung des dritten Abschnitts 146 kann das Einführen in eine Ablassöffnung 210, 310 erleichtern und kann beim Einführen als Führung wirken.

Wie aus Figur 4 weiter ersichtlich ist, ragen der zweite Abschnitt 145 und der dritte Abschnitt 146 des Verschlusssegments 140 in wenigstens einer ersten Stellung in einen Innenraum eines Filtergehäuseteils 200. Eine in den Innenraum ragende Ablassöffnung 310 eines Filterelements 300 ragt mit einem Endbereich ebenfalls in den Innenraum. Hierbei ist eine Mittelachse 360 der Ablassöffnung 310 deckungsgleich mit einer Mittelachse 280 eines Dichtungsabschnitts 214 der Ablassöffnung 210 des Filtergehäuseteils 200 angeordnet, wodurch der zweite Abschnitt 145 und der dritte Abschnitt 146 in die Ablassöffnung 310 des Filterelements 300 ragen. Hierbei bilden der zweite Abschnitt 145 mit wenigstens einem Dichtungselement 150 und dem Dichtungsabschnitt 312 der Ablassöffnung 310 des Filterelements 300 eine Dichtungsanordnung 12 aus. Der dritte Abschnitt 146 ragt in einen Innenraum des Filterelements 300.

Im dargestellten Ausführungsbeispiel weist das Verschlusssegment 140 als Rasthaken ausgeführte Kopplungselemente 147 auf, wobei die Hakenspitzen jeweils radial von innen nach außen verlaufen. Die Rasthaken liegen an einem als Unterseite eines Vorsprungs ausgebildeten Kopplungselement 124 des Verbindungssegments 120 an. Die daraus resultierende kraftschlüssige Kopplungsanordnung 190 koppelt das Verschlusssegment 140 mit dem Verbindungssegment 120. Es sind auch andere Ausgestaltungen der Kopplungsanordnung 190 vorstellbar. Beispielsweise kann das Verbindungssegment 120 die Rasthaken und das Verschlusssegment 140 eine geeignete Eingriffsfläche aufweisen. Zudem sind zusätzlich Aussparungen vorstellbar, in welche die Rasthaken eingreifen können. Des Weiteren sind andere Kopplungsanordnungen 190 vorstellbar.

Wie aus Figuren 5 bis 8 weiter ersichtlich ist, unterscheidet sich das zweite Ausführungsbeispiel des Verschlusselements 100 vom ersten Ausführungsbeispiel des Verschlusselements 100 im Wesentlichen dadurch, dass das Verschlusssegment 140 lediglich den ersten Abschnitt 144 und den zweiten Abschnitt 145 aufweist. Durch den fehlenden dritten Abschnitt 146 ist das zweite Ausführungsbeispiel des Verschlusselements 100 kürzer als das erste Ausführungsbeispiel des Verschlusselements 100 und ragt in der wenigstens einen ersten Stellung nicht in den Innenraum des Filterelements 300. Zudem weist die Stirnfläche des zweiten Abschnitts 145 eine Mittelachse auf, welche deckungsgleich zu den Mittelachsen 181, 182 des Verschlusssegments 140 angeordnet ist.

Wie aus Figuren 9 bis 12 weiter ersichtlich ist, unterscheidet sich das dritte Ausführungsbeispiel des Verschlusselements 100 vom ersten Ausführungsbeispiel und vom zweiten Ausführungsbeispiel des Verschlusselements 100 im Wesentlichen dadurch, dass das Verschlusssegment 140 lediglich den ersten Abschnitt 144 und dadurch nur eine Mittelachse 181, welche versetzt zur Mittelachse 160 des Verbindungssegments 120 angeordnet ist, aufweist. Durch den fehlenden zweiten Abschnitt 145 und den fehlenden dritten Abschnitt 146 ist das dritte Ausführungsbeispiel des Verschlusselements 100 kürzer als das erste Ausführungsbeispiel und das zweite Ausführungsbeispiel des Verschlusselements 100 und ragt nur knapp aus der Ablassöffnung 210 des Filtergehäuseteils 200 in dessen Innenraum. Hierbei verschließt das Verschlusselement 100 lediglich die Ablassöffnung 210 des Filtergehäuseteils 200 in der wenigstens einen ersten Stellung dichtend. Das nicht dargestellte Filterelement kann dann ohne Ablassöffnung ausgeführt werden oder diese anderweitig verschlossen werden.

Wie aus Figuren 13 und 14 weiter ersichtlich ist, weist das vierte Ausführungsbeispiel des Verschlusselements 100 wie das dritte Ausführungsbeispiel des Verschlusselements 100 ein Verschlusssegment 140 mit nur einem ersten Abschnitt 144 auf. Der Unterschied zu den anderen Ausführungsbeispielen liegt in der Kopplungsanordnung 190. Im dargestellten Ausführungsbeispiel weist das Verschlusssegment 140 als Rasthaken ausgeführte Kopplungselemente 147 auf, wobei die Hakenspitzen jeweils radial von außen nach innen verlaufen. Die Rasthaken liegen an einem als Unterseite eines Vorsprungs ausgebildeten Kopplungselement 124 des Verbindungssegments 120 an.

Wie aus Figuren 15 und 16 weiter ersichtlich ist, unterscheidet sich das fünfte Ausführungsbeispiel des Verschlusselements 100 von dem vierten Ausführungsbeispiel des Verschlusselements 100 im Wesentlichen dadurch, dass das Verbindungssegment 120 einen zusätzlichen Abschnitt aufweist, welcher einen größeren Durchmesser als das Verbindungselement 122 aufweist. Dieser Abschnitt ist in Längsrichtung x nach dem Verbindungselement 122 angeordnet und ragt über das Verbindungselement 122 heraus. Dieser zusätzliche Rand am Verbindungssegment 120 unterscheidet das fünfte Ausführungsbeispiel des Verschlusselements 100 von den anderen Ausführungsbeispielen des Verschlusselements 100.

Das in Figur 17 und 18 dargestellte sechste Ausführungsbeispiel des Verschlusselements 100 ist im Wesentlichen wie das erste Ausführungsbeispiel des Verschlusselements 100 ausgeführt. Der Unterschied zwischen den Ausführungsbeispielen liegt in der Kopplungsanordnungen 190. Im dargestellten sechsten Ausführungsbeispiel weist das Verschlusssegment 140 als Rasthaken ausgeführte Kopplungselemente 147 auf, wobei die Hakenspitzen jeweils radial von außen nach innen verlaufen. Die Rasthaken liegen an einem als Unterseite eines Vorsprungs ausgebildeten Kopplungselement 124 des Verbindungssegments 120 an.

Das in Figur 19 dargestellte siebte Ausführungsbeispiel des Verschlusselements 100 unterscheidet sich von dem ersten Ausführungsbeispiel des Verschlusselements 100, dem zweiten Ausführungsbeispiel des Verschlusselements 100, und dem sechsten Ausführungsbeispiel des Verschlusselements 100 dadurch, dass das Verschlusssegment 140 keinen dritten Abschnitt 146 aufweist, und dass der zweite Abschnitt 145 eine Aufnahme für die Ablassöffnung 310 des Filterelements 300 aufweist. Die Mittelachse dieser Aufnahme ist deckungsgleich zur Mittelachse 182 des zweiten Abschnitts 145 angeordnet. In der wenigstens einen ersten Stellung ist die Ablassöffnung 310 des Filterelements 300 in die Aufnahme des zweiten Abschnitts 145 eingeschoben. Hierbei ist das Dichtungselement 150 zwischen einem Dichtungsbereich 142 an einer Innenseite der Aufnahme und einem Dichtungsbereich 314 an einer Außenseite der Ablassöffnung 310 des Filterelements 300 angeordnet. Der Dichtungsbereich 314 der Außenseite der Ablassöffnung 310 des Filterelements 300 ist als Dichtungsaufnahme ausgeführt. Der Dichtungsbereich 142 an der Innenseite der Aufnahme ist als Dichtungsfläche ausgeführt. Es wäre auch eine vertauschte Anordnung von Dichtungsaufnahme und Dichtungsfläche vorstellbar. Zudem wäre in einem alternativen Ausführungsbeispiel eine Anordnung der Mittelachse der Aufnahme versetzt zur Mittelachse 182 des zweiten Abschnitts 145 vorstellbar. Eine weitere alternative Ausgestaltung wäre ein zweiter Abschnitt 145 mit Aufnahme für die Ablassöffnung 310, wobei die Mittelachse 182 des zweiten Abschnitts 145 versetzt zur Mittelachse 181 des ersten Abschnitts 144 angeordnet ist. Die Ausrichtung der Ablassöffnung 310 am Filterelement 300 bzw. die Ausrichtung des Filterelements 300 im Innenraum des Filtergehäuseteils 200 wird entsprechend angepasst, bzw. das Verschlusselement 100 kann dadurch an eine Ausrichtung der Ablassöffnung 310 des Filterelements 300 angepasst sein, sodass die Mittelachse 360 der Ablassöffnung 310 deckungsgleich zur Mittelachse der Aufnahme angeordnet ist.

Das in Figur 20 dargestellte achte Ausführungsbeispiel des Verschlusselements 100 unterscheidet sich von dem ersten Ausführungsbeispiel des Verschlusselements 100, dem zweiten Ausführungsbeispiel des Verschlusselements 100, dem sechsten Ausführungsbeispiel des Verschlusselements 100 und dem siebten Ausführungsbeispiel des Verschlusselements 100 dadurch, dass der erste Abschnitt 144 des Verschlusssegments 140 eine Mittelachse 181 aufweist, welche versetzt zur Mittelachse 160 des Verbindungssegments 120 und versetzt zur Mittelachse 182 des zweiten Abschnitts 145 angeordnet ist. Dadurch ist der erste Abschnitt 144 exzentrisch zum Verbindungssegment 120 und exzentrisch zweiten Abschnitt 145 angeordnet. Im dargestellten Ausführungsbeispiel ist die Mittelachse 182 des zweiten Abschnitts 145 deckungsgleich zur Mittelachse 160 des Verbindungssegments 120 angeordnet. Dadurch ist eine Mittelachse 360 der Ablassöffnung 310 des Filterelements 300 deckungsgleich zur Mittelachse 160 des Verbindungssegments 120 auszurichten, um eine Abdichtung der Ablassöffnung 310 durch den zweiten Abschnitt 145 zu ermöglichen. In einer alternativen Ausgestaltung kann der zweite Abschnitt 145 eine Mittelachse 182 aufweisen, welche versetzt zur Mittelachse 181 des ersten Abschnitts 144 und versetzt zur Mittelachse 160 des Verbindungssegments 120 angeordnet ist. Hierbei ist die Mittelachse 360 der Ablassöffnung 310 des Filterelements entsprechend auszurichten. Ein weiteres Ausführungsbeispiel, kann dem achten Ausführungsbeispiel entsprechen, wobei das Verschlusssegment 140 zudem den dritten Abschnitt 146 aufweisen oder einen zweiten Abschnitt 145 mit Aufnahme für das Ablassöffnung 310 des Filterelements 300 aufweisen kann.

Im Folgenden werden Ausführungsbeispiele eines Filtergehäuseteils 200 beschrieben, wobei zunächst auf die Gemeinsamkeiten und im weiteren Verlauf auf die Unterschiede eingegangen wird.

Wie aus Figuren 4, 8, 12, 14, 16, 17, 18, 19, 20, 21, 23, 25, 26, 27, 28 und 29 ersichtlich ist, umfasst das Filtergehäuseteil 200 für das Filtersystem 10 den Innenraum und die mit dem Innenraum gekoppelte Ablassöffnung 210. Die Ablassöffnung 210 ist in Längsrichtung x unten am Filtergehäuseteil 200 angeordnet, sodass ein Fluid bei Freigabe der Ablassöffnung 210 durch die Schwerkraft angetrieben aus dem Innenraum strömen kann. Die Ablassöffnung 210 weist wenigstens zwei in Längsrichtung x hintereinander angeordnete Abschnitte 212, 214 auf. Wenigstens ein Verbindungsabschnitt 212 weist eine in Längsrichtung x verlaufende Mittelachse 260 auf. Wenigstens ein Dichtungsabschnitt 214 weist eine in Längsrichtung x verlaufende Mittelachse 280 und wenigstens einen Dichtungsbereich 215 auf. Die Mittelachse 260 des wenigstens einen Verbindungsabschnitts 212 ist versetzt zur Mittelachse 280 des wenigstens einen Dichtungsabschnitts 214 angeordnet. Hierbei entspricht der Achsenversatz v der Mittelachsen 260, 280 der Ablassöffnung 210 dem Achsenversatz v des korrespondierenden Verschlusselements 100, welches in die Ablassöffnung 210 einführbar ist und in wenigstens einer ersten Stellung die Ablassöffnung 210 dichtend verschließt. Das Verschlusselement 100 ist nach einem der bereits beschriebenen Ausführungsbeispiele ausgeführt.

Die dargestellten Ausführungsbeispiele des Filtergehäuseteils 200 weisen jeweils nur einen Verbindungsabschnitt 212 und jeweils nur einen Dichtungsabschnitt 214 in der Ablassöffnung 210 auf. In einem alternativen nicht dargestellten Ausführungsbeispiel kann die Ablassöffnung 210 auch mehrere Verbindungsabschnitte 212 oder mehrere Dichtungsabschnitte 214 oder mehrere Dichtungsabschnitte 214 und mehrere Verbindungsabschnitte 212 aufweisen. Der jeweilige Dichtungsabschnitt 214 der Ablassöffnung 210 weist einen Dichtungsbereich 215 auf, welcher als Dichtfläche ausgebildet ist. An dieser Dichtfläche kann ein Dichtungselement 150 anliegen. In einer alternativen Ausgestaltung kann der Dichtungsbereich auch als Aufnahmenut für ein Dichtungselement 150 ausgebildet sein.

Wie aus Figuren 4, 8, 12, 14, 16, 17, 18, 19, 20, 21, 23, 25, 26, 27, 28 und 29 weiter ersichtlich ist, weisen die dargestellten Ausführungsbeispiele des Filtergehäuseteils 200 runde Querschnitte auf. Die Ablassöffnung 210 weist mehrere runde Querschnitte mit verschiedenen Durchmessern auf. Dementsprechend weisen die korrespondierenden Verschlusselemente 100 ebenfalls runde Querschnitte auf. Die Ablassöffnung 210 und das korrespondierende Verschlusselement 100 sind so aneinander angepasst, dass ein Innendurchmesser der Ablassöffnung 210 und ein Außendurchmesser des Verschlusselements 100 so gewählt sind, dass in wenigstens einer ersten Stellung des Verschlusselements 100 der Verbindungsabschnitt 212 der Ablassöffnung 210 und das Verbindungssegment 120 des Verschlusselements 100 eine lösbare Verbindung ausbilden und der Dichtungsbereich 142 des Verschlusssegments 140 des Verschlusselements 100 mit dem wenigstens einen Dichtungsbereich 215 des Dichtungsabschnitts 214 der Ablassöffnung 210 eine Dichtungsanordnung 12 mit dem Dichtungselement 150 ausbilden, welches zwischen den Dichtungsbereichen 142, 215 angeordnet ist.

In der wenigstens einen ersten Stellung des Verschlusselements 100 ist wenigstens eine Mittelachse 160 des Verbindungssegments 120 des Verschlusselements 100 deckungsgleich zur Mittelachse 260 des wenigstens einen Verbindungsbereichs 212 der Ablassöffnung 210 angeordnet. Die Mittelachse 181 des ersten Abschnitts 144 des Verschlusssegments 140 ist deckungsgleich zur Mittelachse 280 des wenigstens einen Dichtungsbereichs 214 angeordnet. Die Mittelachsen 260, 280 der Ablassöffnung müssen nicht deckungsgleich zu einer Mittelachse des Filtergehäuseteils 210 angeordnet sein.

In den dargestellten Ausführungsbeispielen umfasst die Dichtungsanordnung 12 zwischen dem ersten Abschnitt 144 und dem Dichtungsabschnitt 214 der Ablassöffnung 210 ein ringförmiges Dichtungselement 150, welches zwischen einem Dichtungsbereich 142 des ersten Abschnitts 144 und einem Dichtungsbereich 215 des Dichtungsabschnitts 214 angeordnet ist. Das ringförmige Dichtungselement 150 ist in einer als Dichtungsnut ausgebildeten Dichtungsaufnahme 143 des Dichtungsbereichs 142 des ersten Abschnitts des Verschlusssegments 140 angeordnet und umschließt das Verschlusssegment 140 im Dichtungsbereich 142. In der wenigstens einen ersten Stellung liegt das Dichtungselement 150 an dem als Dichtungsfläche ausgebildeten Dichtungsbereich 215 des Dichtungsabschnitts 214 der Ablassöffnung 210 an. In einem alternativen Ausführungsbeispiel sind auch andere Formen des Dichtungselements 150 und der Dichtungsbereiche 142, 215 vorstellbar. Beispielsweise kann der Dichtungsabschnitt 214 eine Dichtungsaufnahme und der Dichtungsbereich 142 des ersten Abschnitts 144 kann die Dichtungsfläche aufweisen. Zudem kann die Dichtungsanordnung 12 mehr als ein Dichtungselement 150 aufweisen.

Ist eines der Ausführungsbeispiele der Verschlusselements 100 mit einem zweiten Abschnitt 145 oder einem zweiten Abschnitt 145 und einem dritten Abschnitt 146 in der Ablassöffnung 210 angeordnet, dann ragt der zweite Abschnitt 145 bzw. ragen der zweite Abschnitt 145 und der dritte Abschnitt 146 in der wenigstens einen ersten Stellung zumindest teilweise in den Innenraum des Filtergehäuseteils 200. Hierbei können die Abschnitte 145, 146 in eine Ablassöffnung 310 des Filterelements 300 ragen, welche in den Innenraum ragt.

In den dargestellten Ausführungsbeispielen des Filtergehäuseteils ist der wenigstens eine Verbindungsabschnitt 212 an einem dem Innenraum des Filtergehäuseteils 200 abgewandten Bereich der Ablassöffnung 210, und der wenigstens eine Dichtungsabschnitt 214 ist an einem dem Innenraum des Filtergehäuseteils 200 zugewandten Bereich der Ablassöffnung 210 angeordnet. Dadurch ist die Dichtungsanordnung 12 im innen liegenden geschützten Bereich der Ablassöffnung 210 angeordnet, wodurch das Dichtungselement 150 vor äußeren Einflüssen geschützt. Der Verbindungsabschnitt 212 der Ablassöffnung 210 weist in den dargestellten Ausführungsbeispielen einen größeren Querschnitt auf als der wenigstens eine Dichtungsabschnitt 214 der Ablassöffnung 210. Der das Verschlusssegment 140 überlappende Bereich des Verbindungssegments 120 deckt den Dichtungsabschnitt 214 der Ablassöffnung 210 zusätzlich ab. Zudem sind im Übergangsbereich zwischen den Verbindungsabschnitt 212 und dem Dichtungsabschnitt 214 Absätze an der Innenkontur der Ablassöffnung 210 angeordnet, welche als Anschlag für die Segmente 120, 140 oder Abschnitte 144, 145 der Segmente 120, 140 wirken.

In den dargestellten Ausführungsbeispielen des Filtergehäuseteils 200, weisen der Verbindungsabschnitt 212 der Ablassöffnung 210 und das Verbindungssegment 120 des Verschlusselements 100 jeweils zueinander komplementäre lösbare Verbindungselemente 122, 213 auf. Hierbei entspricht das Verbindungselement 122 einem Außengewinde, welches in das korrespondierende als Innengewinde ausgeführte Verbindungselement 213 der Ablassöffnung 210 einschraubbar ist. Durch die drehbare Lagerung des Verbindungssegments 120 am Verschlusssegment 140 wird die Drehbewegung beim Einschrauben des Verbindungssegments 120 nicht oder kaum auf das Verschlusssegment 140 übertragen, wodurch keine oder wenige radialen Kräfte oder Scherkräfte auf das Dichtungselement 150 wirken. Durch die Kopplungsanordnung 190 wird die Bewegung in Längsrichtung x auf das Verschlusssegment 140 übertragen, sodass das Verschlusssegment 140 in Längsrichtung x in Richtung des korrespondierenden Dichtungsabschnitts 214, 312 bewegt werden kann. Durch ein geeignetes Werkzeug kann ein Drehmoment über das Betätigungselement 126 auf das Verbindungssegment 120 übertragen und das Einschrauben erleichtert werden. In einem alternativen, nicht dargestellten Ausführungsbeispiel kann anstelle der Schraubverbindung auch eine andere geeignete Verbindung das Verbindungssegment 120 mit dem Verbindungsabschnitt 212 verbinden. Vorstellbar ist eine Bajonettverbindung, eine Clipverbindung, eine Schnappverbindung, eine Rastverbindung oder eine Klemmverbindung. Hierbei können entsprechende Verbindungselemente 122, 213 am Verbindungssegment 120 und am Verbindungsabschnitt 212 angeordnet sein. Zudem können verschiedene Verbindungsarten miteinander kombiniert werden.

In einem alternativen, nicht dargestellten Ausführungsbeispiel weist das Filtergehäuseteil 200 an Wänden der Ablassöffnung 210, welche außerhalb des wenigstens einen Dichtungsbereichs 215 angeordnet sind, ein Profil auf. Dieses Profil kennzeichnet Bereiche, an denen das Dichtungselement 150 nicht angeordnet werden soll. Dadurch kann der vorgesehene Bereich für das Dichtungselement 150 leichter erkannt werden. Zudem kann sichergestellt werden, dass das Dichtungselement 150 in dem wenig exponierten Bereich innerhalb der Ablassöffnung 210 angeordnet ist.

Die in Figuren 4, 8, 12, 14, 16, 17, 19, 20 dargestellten Filtergehäuseteile 200 unterscheiden sich im Wesentlichen dadurch, dass die Abmessungen der Ablassöffnung 210, insbesondere die Abschnitte 212, 214 der Ablassöffnung 210 an unterschiedliche Verschlusselemente 100 und deren Achsenversatz v angepasst sind.

In Figur 21 ist eine Außenansicht eines Ausführungsbeispiels des Filtergehäuseteils 200 dargestellt, welche Führungselemente 230 von außen zeigt. Zudem ist die Ablassöffnung 210 freigegeben.

Figur 22 zeigt eine Schnittdarstellung entlang der Schnittlinie XXII aus Figur 21. Hierbei ist in dem Filtergehäuseteil 200 ein Filterelement 300 und in den Ablassöffnungen 210, 310 ein Verschlusselement 100 nach dem ersten Ausführungsbeispiel angeordnet. Das Filterelement 300 weist Führungselemente 330 auf, welche von den Führungselementen 230 des Filtergehäuseteils 200 geführt werden. Wie aus Figur 22 ersichtlich ist, ist ein Führungselement 330 des Filterelements 300 breiter ausgeführt als die beiden anderen Führungselemente 330. Das Filtergehäuseteil 200 weist ein korrespondierendes breiteres Führungselement 230 und zwei schmalere Führungselemente auf, dadurch kann die Ausrichtung des Filterelements 300 im Filtergehäuseteil 200 und die Ausrichtung der Ablassöffnung 310 des Filterelements 300 zur Ablassöffnung 210 des Filtergehäuseteils 200 vorgegeben werden. Es sind auch andere Führungselemente 230, 330 und andere Anordnungen vorstellbar. Durch die Führungselemente 230,330 kann sichergestellt werden, dass die Mittelachse 360 der Ablassöffnung 310 so zur Ablassöffnung 210 des Filtergehäuseteils 200 angeordnet ist, dass eine Mittelachse 182 des zweiten Abschnitts des Verschlusselements 100 deckungsgleich zur Mittelachse 360 der Ablassöffnung angeordnet ist. Im dargestellten Ausführungsbeispiel ist die Mittelachse 360 der Ablassöffnung 310 zudem deckungsgleich zur Mittelachse 181 des ersten Abschnitts des Verschlusselements 100 und deckungsgleich zur Mittelachse 280 des Dichtungsabschnitts 214 der Ablassöffnung 210 des Filtergehäuseteils 200 angeordnet. Je nach Ausführung des Verschlusselements 100 kann die Ausrichtung der Mittelachse 360 der Ablassöffnung 310 des Filterelements 300 zu den Mittelachsen 280, 260 der Ablassöffnung 210 des Filtergehäuseteils 200 variieren. Die Ablassöffnung 310 des Filterelements 300 ist exzentrisch zur Endscheibe 340, an welcher diese angeordnet ist, und exzentrisch zu einem Mittelrohr 370, welches ein Filtermedium 316 von innen stützt, angeordnet. Es ist auch eine andere Ausbildung des Mittelrohrs 370 vorstellbar. Das Mittelrohr 370 und die Endscheibe 340 weisen Mittelachsen auf, welche deckungsgleich zur Mittelachse 160 des Verbindungssegments 120 und zur Mittelachse 260 des Verbindungsabschnitts 212 angeordnet sind. Dies kann jedoch variieren, ohne dass Einfluss auf die Abdichtung der Ablassöffnung 310 genommen wird. Um eine Abdichtung der Ablassöffnung 310 zu erzielen, muss die Ablassöffnung 310 so über der Ablassöffnung 210 des Filtergehäuseteils 200 positioniert werden, dass die Mittelachse 360 der Ablassöffnung 310 deckungsgleich zur Mittelachse 182 des zweiten Abschnitts 145 des Verschlusselements 100 angeordnet ist, welches in der Ablassöffnung 210 des Filtergehäuseteils 200 angeordnet werden kann.

Die in Figuren 21 bis 28 dargestellten Ausführungsbeispiele des Filtergehäuseteils 200 unterscheiden sich im Wesentlichen durch die Ausgestaltung der Führungselemente 230 voneinander.

In Figur 22 ist das Führungselement 230 als Ausnehmung ausgeführt, in welcher ein korrespondierendes als Ausbuchtung ausgeführtes Führungselement 330 des Filterelements 300 geführt ist. Das Filtergehäuseteil 200 weist mehrere solcher Führungselemente 230 auf.

In Figur 23, 25 und 26 ist das Führungselement 230 als Ausbuchtung oder als Schiene ausgeführt, welche in einem als Aufnahme ausgeführten Führungselement des Filterelements 300 angeordnet ist. Zudem zeigen die Figuren 25 und 26 verschiedene Positionen des Filterelements 300 beim Einführen oder Ausführen des Filterelements 300 in das oder aus dem Filtergehäuseteil 200. Das Filtergehäuseteil 200 weist mehrere solcher Führungselemente 230 auf.

In Figur 27 ist das Führungselement 230 als Ausnehmung ausgeführt, in welcher ein korrespondierendes als Ausbuchtung ausgeführtes Führungselement 330 des Filterelements 300 geführt ist. Im Unterschied zu dem in Figur 22 dargestellten Ausführungsbeispiel ist die Ausnehmung nicht in die Gehäusewand eingestanzt, sondern wird durch ein zusätzliches in den Innenraum eingelegtes Bauteil realisiert. Das Filtergehäuseteil 200 weist mehrere solcher Führungselemente 230 auf.

In Figur 28 ist das Führungselement 230 als nach unten gebogene Führungskante ausgeführt, auf welcher ein als Ausbuchtung ausgeführtes Führungselement 330 des Filterelements 300 geführt ist.

In Figur 29 weist das Filtergehäuseteil 200 ein großes nach innen abstehendes Führungselement 230 auf, welches in einem als Ausbuchtung ausgeführten Führungselement 330 des Filterelements 300 geführt ist.

Im Folgenden werden Ausführungsbeispiele eines beschriebenen Filtersystems 10 beschrieben, wobei zunächst auf die Gemeinsamkeiten und im weiteren Verlauf auf die Unterschiede eingegangen wird.

Wie aus Figuren 4, 8, 17, 19, 20, 22, 25, 26, 27, 28 und 29 ersichtlich ist, umfassen die Ausführungsbeispiele des Filtersystems 10 ein Filtergehäuseteil 200, welches einen Innenraum und eine mit dem Innenraum gekoppelte Ablassöffnung 210 umfasst. Ein Verschlusselement 100 verschließt die Ablassöffnung 210 in wenigstens einer ersten Stellung dichtend und gibt in wenigstens einer nicht dargestellten zweiten Stellung die Ablassöffnung 210 zumindest teilweise frei. In der zweiten Stellung des Verschlusselements 100 kann das Verschlusselement einen Durchgang in der Ablassöffnung 210 freigeben, alternativ kann das Verschlusselement 100 außerhalb der Ablassöffnung 210 angeordnet sein, wobei die Ablassöffnung 210 vollständig freigegeben ist.

Im Innenraum des Filtergehäuseteils 200 ist ein Filterelement 300 mit einer Ablassöffnung 310 angeordnet. Ein dem Filtergehäuseteil 200 zugewandter Endbereich der Ablassöffnung 310 des Filterelements 300 ist mit der Ablassöffnung 210 des Filtergehäuseteils 200 fluidisch gekoppelt. Ein nicht dargestelltes Filtergehäuseteil kann mit dem dargestellten Filtergehäuseteil 200 ein geschlossenes Filtergehäuse ausbilden. Das nicht dargestellte Filtergehäuseteil kann eine Einlassöffnung aufweisen und kann lösbar mit dem dargestellten Filtergehäuseteil 200 verbunden sein. Durch das zweiteilige Filtergehäuse kann das im Innenraum angeordnete Filterelement 300 bei Bedarf einfach ausgetauscht werden. Das Filtersystem 10 ist als Flüssigkeitsfilter, insbesondere als Kraftstofffilter oder als Ölfilterausgeführt. Hierbei strömt die zu filternde Flüssigkeit über die Einlassöffnung in das Filtergehäuse, durchströmt das Filterelement 300 und das gefilterte Fluid strömt durch die Ablassöffnung 210 des Filtergehäuseteils 200 aus dem Filtergehäuse. Bei Bedarf kann das Verschlusselement 100 zumindest in die Ablassöffnung 210 des Filtergehäuseteils 200 in eine der ersten Stellung eingebracht werden, wodurch ein Austreten des Fluids aus dem Filtergehäuseteil 200 unterbunden werden kann.

Wie aus Figuren 4, 8, 17, 19, 20, 22, 25, 26, 27, 28 und 29 weiter ersichtlich ist, umfasst das Filterelement 300 ein Mittelrohr 370, welches ein Filtermedium 316 von innen stützt, und wenigstens eine Endscheibe 340, wobei die wenigstens eine Endscheibe 340 eine Ablassöffnung 310 mit wenigstens einer Mittelachse 360 und wenigstens einem Dichtungsbereich 314 aufweist. Die Mittelachse 360 der Ablassöffnung 310 ist in den dargestellten Ausführungsbeispielen versetzt zur Mittelachse der Endscheibe 340 und zur Mittelachse des Mittelrohrs 370 angeordnet. Es ist auch eine deckungsgleiche Anordnung der Mittelachsen 360 vorstellbar. Weist das Verschlusselement 100 im Ausführungsbeispiel lediglich den ersten Abschnitt 144 auf, kann das Filterelement ohne Ablassöffnung ausgeführt werden oder diese anderweitig verschlossen werden. Weist das Verschlusselement 100 im Ausführungsbeispiel den ersten Abschnitt 144 und den zweiten Abschnitt 145 auf, ragt in der wenigstens einen ersten Stellung des Verschlusselements 100 wenigstens ein in den Innenraum des Filtergehäuseteils 200 ragender Abschnitt 144, 145 des Verschlusssegments 140 des Verschlusselements 100 in die Ablassöffnung 310 des Filterelements 300. Dadurch dichtet die gebildete Dichtungsanordnung 12 die Ablassöffnung 310 des Filterelements 300 im korrespondierenden Dichtungsbereich 142 ab. Zudem wird eine Ablassöffnung 210 des Filtergehäuseteils 200 dichtend verschlossen. Es ist eine weitere Stellung denkbar, in der die Ablassöffnung 310 des Filterelements 300 zumindest teilweise freigegeben ist und die Ablassöffnung 210 des Filtergehäuseteils 200 geschlossen ist. Zum Abdichten der Ablassöffnung 310 des Filterelements 300 ist die Mittelachse 360 der Ablassöffnung 310 so zur Ablassöffnung 210 des Filtergehäuseteils 200 angeordnet, dass eine Mittelachse 182 des zweiten Abschnitts des Verschlusselements 100 deckungsgleich zur Mittelachse 360 der Ablassöffnung 310 angeordnet ist.

Wie aus Figuren 4, 8, 17, 19, 20, 22, 25, 26, 27, 28 und 29 weiter ersichtlich ist, ist ein Querschnitt der Ablassöffnung 310 des Filterelements 300 kleiner als wenigstens einer der Querschnitte der Ablassöffnung 210 des Filtergehäuseteils 200. Hierbei kann die Ablassöffnung 310 als Trichter wirken und das Fluid in die Ablassöffnung 210 des Filtergehäuseteils 200 leiten. Zudem kann ein Endbereich der Ablassöffnung 310, wie in Figur 19 dargestellt ist, in einer Aufnahme des zweiten Abschnitts 145 angeordnet werden.

Wie aus Figuren 4, 8, 17, 19, 20, 22, 25, 26, 27, 28 und 29 weiter ersichtlich ist, ist das Filterelement 300 lösbar über eine Befestigungsanordnung am Filtergehäuseteil 200 befestigt, wobei die Befestigungsanordnung filterelementseitige Befestigungselemente 320 und mit diesen zusammenwirkende gehäuseteilseitige Befestigungselemente 220 aufweist. Wobei die Verteilung der Befestigungselemente am Filterelement 300 lediglich durch die Position der Befestigungselemente 220 am Filtergehäuseteil 200 beschränkt ist, bzw. durch das Bilden von Paaren aus filterelementseitigen Befestigungselementen 320 und gehäuseseitigen Befestigungselementen 220. Hierbei können die Befestigungselemente 320, 220, wie in den Figuren 17,19, 20, 23, 24, 25 und 26 dargestellt ist, als Schnapphaken ausgeführt sein, welche paarweise zusammenwirken. Alternativ kann ein Befestigungselement 220 wie in den Figuren 27, 28 als Eingriffsrand ausgeführt sein, welcher mit einem oder mehreren Schnapphaken zusammenwirkt.

Wie aus Figuren 4, 8, 17, 19, 20, 22, 25, 26, 27, 28 und 29 weiter ersichtlich ist, umfasst eine Gehäusewand des Filtergehäuseteils 200 Führungselemente 230, welche Führungselemente 330 des Filterelements 300 führen. Durch die Führung des Filterelements 300 in eine Endstellung können am Filterelement 300 angeordnete Befestigungselemente 320 und an dem Filtergehäuseteil 200 angeordnete Befestigungselemente 220 zusammengeführt werden und die Ablassöffnung 310 des Filterelements 300 kann mit der Ablassöffnung 210 des Filtergehäuseteils 200 fluidisch gekoppelt werden. Zudem kann die Ausrichtung der Ablassöffnung 310 zum zweiten Abschnitt 145 der Verschlusselements 100 durch die Führung erfolgen.

Bei einer nicht näher dargestellten Verwendung eines Filterelements 300 in einem Filtersystem 10, wird das Filterelement 300 in einen Innenraum des Filtergehäuseteils 200 eingeführt und so zu dem Filtergehäuseteil 200 ausgerichtet, dass wenigstens eine Mittelachse 360 der Ablassöffnung 310 des Filterelements 300 versetzt zu wenigstens einer Mittelachse 260, 280 der Ablassöffnung 210 des Filtergehäuseteils 200 angeordnet ist. Zudem kann das Filterelement 300 so zum Filtergehäuseteil 200 ausgerichtet werden, dass filterelementseitige Befestigungselemente 320 und gehäuseteilseitige Befestigungselemente 220 eine lösbare Befestigung des Filterelements 300 am Filtergehäuseteil 200 ausbilden.

Bei einer nicht näher dargestellten Verwendung eines Verschlusselements 100 in einem Filtersystem 10, wird das Verschlusselement 100 in die Ablassöffnung 210 des Filtergehäuseteils 200 eingeführt. Wenigstens ein erster Abschnitt 144 des Verschlusssegments 140 ragt in den wenigstens einen Dichtungsabschnitt 214 der Ablassöffnung 210, wobei, der wenigstens eine Dichtungsbereich 142 des Verschlusssegments 140, wenigstens ein Dichtungsbereich 215 des Dichtungsabschnitts 214 der Ablassöffnung 210 und wenigstens ein Dichtungselement 150 die Ablassöffnung 210 im korrespondierenden Dichtungsabschnitt 214 abdichten, wobei die Mittelachse 181 des ersten Abschnitts 144 deckungsgleich zur Mittelachse 280 des Dichtungsabschnitts 214 angeordnet ist. Ein Verbindungselement 122 des Verbindungssegments 120 des Verschlusselements 100 bildet mit einem Verbindungselement 213 des Verbindungsabschnitts 212 der Ablassöffnung 210 eine lösbare Verbindung aus, wobei die Mittelachse 160 des Verbindungssegments 120 deckungsgleich zur Mittelachse 280 des Verbindungsabschnitts 212 angeordnet ist. Zudem kann wenigstens ein zweiter Abschnitt 145 des Verschlusssegments 140 in die Ablassöffnung 310 des Filterelements 300 ragen, wobei der korrespondierende Dichtungsbereich 314, der wenigstens eine Dichtungsbereich 142 des zweiten Abschnitts 145 und wenigstens ein Dichtungselement 150 die Ablassöffnung 310 abdichten, wobei die Mittelachse 182 des zweiten Abschnitts 145 deckungsgleich zur Mittelachse 360 der Ablassöffnung 310 angeordnet ist.

### Bezugszeichenliste

- 10: Filteranordnung
- 12: Dichtungsanordnung
- 100: Verschlusselement
- 120: Verbindungssegment
- 122: Verbindungselement
- 124: Kopplungselement 140
- 126: Betätigungselement
- 140: Verschlusssegment
- 142: Dichtungsbereich
- 143: Dichtungsaufnahme
- 144: erster Abschnitt
- 145: zweiter Abschnitt
- 146: dritter Abschnitt
- 147: Kopplungselement zu 120
- 150: Dichtungselement
- 160: Mittelachse Verbindungssegment
- 181: erste Mittelachse Verschlusssegment
- 182: zweite Mittelachse Verschlusssegment
- 190: Kopplungsanordnung

- 200: Filtergehäuseteil Filtertopf
- 210: Ablassöffnung
- 212: Verbindungsabschnitt
- 213: Verbindungselement
- 214: Dichtungsabschnitt
- 215: Dichtungsbereich
- 220: Befestigungselement
- 230: Führungselement
- 260: Mittelachse Verbindungabschnitt
- 280: Mittelachse Dichtungsabschnitt

- 300: Filterelement
- 310: Ablassöffnung
- 312: Dichtungsabschnitt
- 314: Dichtbereich Ablassöffnung
- 316: Filtermedium
- 320: Befestigungselement
- 330: Führungselement
- 340: Endscheibe
- 360: Mittelachse Ablassöffnung
- 370: Mittelrohr
- X: Längsrichtung

## Patentansprüche

1. Verschlusselement (100) für wenigstens eine Ablassöffnung (210, 310) eines Filtersystems (10), mit einem Verbindungssegment (120) und einem daran in Längsrichtung (x) anschließenden Verschlusssegment (140), das wenigstens einen Dichtungsbereich (142) aufweist,
wobei das Verbindungssegment (120) und das Verschlusssegment (140) jeweils wenigstens eine in Längsrichtung (x) verlaufende Mittelachse (160, 181, 182) aufweisen,
wobei wenigstens eine der Mittelachsen (181, 182) des Verschlusssegments (140) versetzt zu wenigstens einer der Mittelachsen (160) des Verbindungssegments (120) angeordnet ist.

2. Verschlusselement nach Anspruch 1, wobei das Verbindungssegment (120) drehbar am Verschlusssegment (140) gelagert ist.

3. Verschlusselement nach Anspruch 1 oder 2, wobei das Verschlusssegment (140) wenigstens zwei Abschnitte (144, 145, 146) aufweist, wobei die Abschnitte (144, 145) jeweils einen Dichtungsbereich (142) und eine Mittelachse (181, 182) aufweisen, wobei die Dichtungsbereiche (142) axial voneinander beabstandet sind, und wobei bevorzugt die Mittelachsen (181, 182) koaxial oder versetzt zueinander vorliegen.

4. Verschlusselement nach einem der vorhergehenden Ansprüche, wobei das Verbindungssegment (120) an einem Endbereich wenigstens ein Betätigungselement (126) zur Einleitung eines Betätigungsmoments aufweist.

5. Verschlusselement nach einem der vorhergehenden Ansprüche, wobei das Verbindungssegment (120) einen größeren Querschnitt aufweist als das Verschlusssegment (140).

6. Filtergehäuseteil (200) für ein Filtersystem (10) mit einem Innenraum und einer mit dem Innenraum gekoppelten Ablassöffnung (210), wobei ein Verschlusselement (100) nach einem der Ansprüche 1 bis 5 die Ablassöffnung (210) in wenigstens einer ersten Stellung dichtend verschließt und in wenigstens einer zweiten Stellung die Ablassöffnung (210) zumindest teilweise freigibt, wobei die Ablassöffnung (210) wenigstens zwei in Längsrichtung (x) hintereinander angeordnete Abschnitte (212, 214) aufweist, wobei wenigstens ein Verbindungsabschnitt (212) eine in Längsrichtung (x) verlaufende Mittelachse (260) aufweist und wenigstens ein Dichtungsabschnitt (214) eine in Längsrichtung (x) verlaufende Mittelachse (280) und wenigstens einen Dichtungsbereich (215) aufweist, wobei die Mittelachse (260) des wenigstens einen Verbindungsabschnitts (212) versetzt zur Mittelachse (280) des wenigstens einen Dichtungsabschnitts (214) angeordnet ist, wobei der wenigstens eine Verbindungsabschnitt (212) der Ablassöffnung (210) und ein Verbindungssegment (120) des Verschlusselements (100) in wenigstens einer der ersten Stellungen eine lösbare Verbindung ausbilden und wenigstens ein Dichtungsbereich (142) eines Verschlusssegments (140) des Verschlusselements (100) mit dem wenigstens einen Dichtungsbereich (215) wenigstens eines der Dichtungsabschnitte (214) der Ablassöffnung (210) eine Dichtungsanordnung (12) ausbilden.

7. Filtergehäuseteil nach Anspruch 6, wobei der wenigstens eine Verbindungsabschnitt (212) an einem dem Innenraum des Filtergehäuseteils (200) abgewandten Bereich der Ablassöffnung (210) und der wenigstens eine Dichtungsabschnitt (214) an einem dem Innenraum des Filtergehäuseteils (200) zugewandten Bereich der Ablassöffnung (210) angeordnet sind.

8. Filtergehäuseteil nach Anspruch 6 oder 7, wobei der wenigstens eine Verbindungsabschnitt (212) der Ablassöffnung (210) einen größeren Querschnitt aufweist als der wenigstens eine Dichtungsabschnitt (214) der Ablassöffnung (210).

9. Filtergehäuseteil nach einem der Ansprüche 6 bis 8, wobei der wenigstens eine Verbindungsabschnitt (212) der Ablassöffnung (210) und das Verbindungssegment (120) des Verschlusselements (100) jeweils zueinander komplementäre lösbare Verbindungselemente (122, 213) aufweisen.

10. Filtergehäuseteil nach einem der Ansprüche 6 bis 9, wobei Wände der Ablassöffnung (210) außerhalb des wenigstens einen Dichtungsbereichs (215) ein Profil, insbesondere ein Stufenprofil, aufweisen.

11. Filterelement (300) mit einem Filtermedium (316) und wenigstens einer Endscheibe (340), wobei die wenigstens eine Endscheibe (340) einen Eingriffsabschnitt (310) mit wenigstens einer Mittelachse (360) und wenigstens einem zumindest teilumfänglich verlaufenden Eingriffsbereich (312) aufweist, wobei wenigstens eine Mittelachse (360) des Eingriffsabschnitts (310) versetzt zu wenigstens einer Mittelachse des Filterelements (300) und/oder versetzt zur Mittelachse der Endscheibe (340) angeordnet ist.

12. Filterelement (300) nach Anspruch 11, wobei der Eingriffsabschnitt (310) eine Ablassöffnung (310) ist, die die Endscheibe (340) durchbricht und mit einem Elementinnenraum fluidisch kommuniziert, und wobei der Eingriffsbereich (312) ein Dichtungsbereich (314) ist.

13. Filtersystem (10) mit einem Filtergehäuseteil (200) nach einem der Ansprüche 6 bis 10, welches einen Innenraum und eine mit dem Innenraum gekoppelte Ablassöffnung (210) umfasst, wobei ein Verschlusselement (100) nach einem der Ansprüche 1 bis 5 die Ablassöffnung (210) in wenigstens einer ersten Stellung dichtend verschließt und in wenigstens einer zweiten Stellung die Ablassöffnung (210) zumindest teilweise freigibt, wobei im Innenraum des Filtergehäuseteils (200) ein Filterelement (300) mit einem Eingriffsabschnitt (310) angeordnet ist, wobei der Eingriffsabschnitt (310) des Filterelements (300) mit wenigstens einen Dichtungsbereich (142) des Verschlusselements (100) in Eingriff steht oder bringbar ist.

14. Filtersystem (10) nach Anspruch 13, wobei das Filterelement (300) ein Filterelement nach Anspruch 11 oder 12 ist, wobei der Eingriffsabschnitt (310) eine Ablassöffnung (310) ist, wobei die Ablassöffnung (310) des Filterelements mit der Ablassöffnung (210) des Filtergehäuseteils (200) fluidisch gekoppelt ist, bevorzugt über einen dem Filtergehäuseteil (200) zugewandten Endbereich der Ablassöffnung (310) des Filterelements.

15. Filtersystem nach Anspruch 14, wobei eine Mittelachse (360) der Ablassöffnung (310) des Filterelements (300) versetzt zu einer weiteren Mittelachse des Filterelements (300) und/oder versetzt zu einer Mittelachse des Filtergehäuseteils (200) und/oder versetzt zu wenigstens einer Mittelachse (260, 280) der Ablassöffnung (210) des Filtergehäuseteils (200) angeordnet ist.

16. Verwendung eines Filterelements (300) in einem Filtersystem (10) nach einem der Ansprüche 13 bis 15, wobei das Filterelement (300) in einen Innenraum eines Filtergehäuseteils (200) eingeführt wird und so zu dem Filtergehäuseteil (200) ausgerichtet wird, dass wenigstens eine Mittelachse (360) eines Eingriffsabschnitts (310) des Filterelements (300) versetzt zu wenigstens einer Mittelachse (260,280) einer Ablassöffnung (210) des Filtergehäuseteils (200) angeordnet ist.

17. Verwendung eines Verschlusselements (100) nach einem der Ansprüche 1 bis 5 in einem Filtersystem (10) nach einem der Ansprüche 13 bis 15, wobei das Verschlusselement (100) in eine Ablassöffnung (210) eines Filtergehäuseteils (200) eingeführt wird, wobei wenigstens ein erster Abschnitt (144) eines Verschlusssegments (140) in wenigstens einen Dichtungsabschnitt (214) der Ablassöffnung (210) ragt, wobei wenigstens ein Dichtungsbereich (142) des Verschlusssegments (140), wenigstens ein Dichtungsbereich (215) des Dichtungsabschnitts (214) der Ablassöffnung (210) und wenigstens ein Dichtungselement (150) die Ablassöffnung (210) im korrespondierenden Dichtungsabschnitt (214) abdichten, wobei eine Mittelachse (181) eines ersten Abschnitts (144) des Verschlusssegments (140) deckungsgleich zu einer Mittelachse (280) des Dichtungsabschnitts (214) der Ablassöffnung (210) angeordnet ist, wobei ein Verbindungselement (122) eines Verbindungssegments (120) des Verschlusselements (100) mit einem Verbindungselement (213) eines Verbindungsabschnitts (212) der Ablassöffnung (210) eine lösbare Verbindung ausbildet, wobei eine Mittelachse (160) des Verbindungssegments (120) deckungsgleich zu einer Mittelachse (260) des Verbindungsabschnitts (212) angeordnet ist.

## Claims

1. A closure member (100) for at least one discharge opening (210, 310) of a filter system (10), having a connecting segment (120) and a closure segment (140) adjoining it in the longitudinal direction (x), said closure segment having at least one sealing area (142),
wherein the connecting segment (120) and the closure segment (140) each have at least one center axis (160, 181, 182) extending in the longitudinal direction (x),
wherein at least one of the center axes (181, 182) of the closure segment (140) is offset relative to at least one of the center axes (160) of the connecting segment (120).

2. The closure member according to claim 1, wherein the connecting segment (120) is rotatably mounted on the closure segment (140).

3. The closure member according to claim 1 or 2, wherein the closure segment (140) features at least two sections (144, 145, 146), wherein the sections (144, 145) each having a sealing area (142) and a center axis (181, 182), wherein the sealing areas (142) are axially spaced apart from each other, and wherein the center axes (181, 182) are preferably coaxial or offset relative to each other.

4. The closure member according to one of the preceding claims, wherein the connecting segment (120) features at least one actuation member (126) at one end region for initiating an actuating torque.

5. The closure member according to one of the preceding claims, wherein the connecting segment (120) features a larger cross-section than the closure segment (140).

6. A filter housing component (200) for a filter system (10) having an interior space and a discharge opening (210) coupled to the interior space, wherein a closure element (100) according to one of the claims 1 to 5 seals the discharge opening (210) in at least a first position and, in at least a second position, at least partially releases the discharge opening (210), wherein the discharge opening (210) features at least two sections (212, 214) disposed one behind the other in the longitudinal direction (x), wherein at least one connecting section (212) features a center axis (260) extending in the longitudinal direction (x) and at least one sealing portion (214) features a center axis (280) extending in the longitudinal direction (x) and at least one sealing area (215), wherein the center axis (260) of the at least one connecting section (212) is offset relative to the center axis (280) of the at least one sealing portion (214), wherein the at least one connecting section (212) of the discharge opening (210) and a connecting segment (120) of the closure member (100) form a releasable connection in at least one of the first positions, and at least one sealing area (142) of a closure segment (140) of the closure member (100) with the at least one sealing area (215) of at least one of the sealing portions (214) of the discharge opening (210) form a sealing arrangement (12).

7. The filter housing component according to claim 6, wherein the at least one connecting section (212) is disposed at a region of the discharge opening (210) facing away from the interior space of the filter housing component (200) and the at least one sealing portion (214) is arranged at a region of the discharge opening (210) facing the interior space of the filter housing component (200).

8. The filter housing component according to claim 6 or 7, wherein the at least one connecting section (212) of the discharge opening (210) features a larger cross-section than the at least one sealing portion (214) of the discharge opening (210).

9. The filter housing component according to one of the claims 6 to 8, wherein the at least one connecting section (212) of the discharge opening (210) and the connecting segment (120) of the closure member (100) each feature complementary detachable connecting elements (122, 213).

10. The filter housing component according to one of the claims 6 to 9, wherein walls of the discharge opening (210) outside the at least one sealing area (215) have a profile, in particular a stepped profile.

11. A filter element (300) having a filter medium (316) and at least one end disc (340), wherein the at least one end disc (340) features an engagement section (310) with at least one center axis (360) and at least one engagement portion (312) extending at least partially around the circumference, wherein at least one center axis (360) of the engagement section (310) is offset relative to at least one center axis of the filter element (300) and/or offset relative to the center axis of the end disc (340).

12. The filter element (300) according to claim 11, wherein the engagement section (310) is a discharge opening (310) that penetrates the end disc (340) and communicates fluidically with an element interior space, and wherein the engagement portion (312) is a sealing area (314).

13. A filter system (10) having a filter housing component (200) according to one of the claims 6 to 10, which comprises an interior space and a discharge opening (210) coupled to the interior space, wherein a closure element (100) according to one of the claims 1 to 5 seals the discharge opening (210) in at least a first position and, in at least a second position, at least partially releases the discharge opening (210), wherein a filter element (300) having an engagement section (310) is disposed in the interior space of the filter housing component (200), wherein the engagement section (310) of the filter element (300) engages or can be brought into engagement with at least one sealing area (142) of the closure member (100).

14. The filter system (10) according to claim 13, wherein the filter element (300) is a filter element according to claim 11 or 12, wherein the engagement section (310) is a discharge opening (310), wherein the discharge opening (310) of the filter element is fluidically coupled to the discharge opening (210) of the filter housing component (200), preferably via an end region of the discharge opening (310) of the filter element facing the filter housing component (200).

15. The filter system according to claim 14, wherein a center axis (360) of the discharge opening (310) of the filter element (300) is offset relative to a further center axis of the filter element (300) and/or offset relative to a center axis of the filter housing component (200) and/or offset relative to at least one center axis (260, 280) of the discharge opening (210) of the filter housing component (200).

16. A use of a filter element (300) in a filter system (10) according to one of the claims 13 to 15, wherein the filter element (300) is inserted into an interior space of a filter housing component (200) and is aligned with respect to the filter housing component (200) such that at least one center axis (360) of an engagement section (310) of the filter element (300) is offset relative to at least one center axis (260, 280) of a discharge opening (210) of the filter housing component (200).

17. The use of a closure member (100) according to one of the claims 1 to 5 in a filter system (10) according to one of the claims 13 to 15, wherein the closure member (100) is inserted into a discharge opening (210) of a filter housing component (200), wherein at least a first section (144) of a closure segment (140) protrudes into at least one sealing portion (214) of the discharge opening (210), wherein at least one sealing area (142) of the closure segment (140), at least one sealing area (215) of the sealing portion (214) of the discharge opening (210) and at least one sealing member (150) seal the discharge opening (210) in the corresponding sealing portion (214), wherein a center axis (181) of a first section (144) of the closure segment (140) is congruent with a center axis (280) of the sealing portion (214) of the discharge opening (210), wherein a connecting element (122) of a connecting segment (120) of the closure element (100) forms a releasable connection with a connecting element (213) of a connecting section (212) of the discharge opening (210), wherein a center axis (160) of the connecting segment (120) is disposed to be congruent with a center axis (260) of the connecting section (212).

## Revendications

1. Élément de fermeture (100) pour au moins une ouverture d'évacuation (210, 310) d'un système de filtre (10), ayant un segment de raccordement (120) et un segment de fermeture (140) qui s'y raccorde dans la direction longitudinale (x) et qui présente au moins une zone d'étanchéité (142),
le segment de raccordement (120) et le segment de fermeture (140) présentant chacun au moins un axe central (160, 181, 182) s'étendant dans la direction longitudinale (x),
au moins l'un des axes centraux (181, 182) du segment de fermeture (140) étant décalé par rapport à au moins l'un des axes centraux (160) du segment de raccordement (120).

2. Élément de fermeture selon la revendication 1, le segment de raccordement (120) étant monté de manière rotative sur le segment de fermeture (140).

3. Élément de fermeture selon la revendication 1 ou 2, le segment de fermeture (140) présentant deux sections (144, 145, 146), les sections (144, 145) présentant chacune une zone d'étanchéité (142) et un axe central (181, 182), les zones d'étanchéité (142) étant espacées axialement les unes des autres, et les axes centraux (181, 182) étant de préférence coaxiaux ou décalés les uns par rapport aux autres.

4. Élément de fermeture selon l'une quelconque des revendications précédentes, le segment de raccordement (120) présentant au moins un élément d'actionnement (126) sur une zone d'extrémité pour induire un couple d'actionnement.

5. Élément de fermeture selon l'une quelconque des revendications précédentes, le segment de raccordement (120) présentant une section transversale plus grande que le segment de fermeture (140).

6. Partie de boîtier de filtre (200) pour un système de filtre (10) ayant un espace intérieur et une ouverture d'évacuation (210) couplée à l'espace intérieur, un élément de fermeture (100) selon l'une quelconque des revendications 1 à 5 fermant de manière étanche l'ouverture d'évacuation (210) dans au moins une première position et libérant au moins partiellement l'ouverture d'évacuation (210) dans au moins une deuxième position, l'ouverture d'évacuation (210) présentant au moins deux sections (212, 214) disposées l'une derrière l'autre dans la direction longitudinale (x), au moins une section de raccordement (212) présentant un axe central (260) s'étendant dans la direction longitudinale (x) et au moins une section d'étanchéité (214) présentant un axe central (280) s'étendant dans la direction longitudinale (x) et au moins une zone d'étanchéité (215), l'axe central (260) de la section de raccordement (212), au moins au nombre d'une, étant décalé par rapport à l'axe central (280) de la section d'étanchéité (214), au moins au nombre d'une, la section de raccordement (212), au moins au nombre d'une, de l'ouverture d'évacuation (210) et un segment de raccordement (120) de l'élément de fermeture (100) formant une liaison amovible dans au moins l'une des premières positions, et au moins une zone d'étanchéité (142) d'un segment de fermeture (140) de l'élément de fermeture (100) formant une structure d'étanchéité (12) avec au moins une zone d'étanchéité (215) d'au moins une des sections d'étanchéité (214) de l'ouverture d'évacuation (210).

7. Partie de boîtier de filtre selon la revendication 6, la section de raccordement (212), au moins au nombre d'une, étant située dans une zone de l'ouverture d'évacuation (210) opposée à l'espace intérieur de la partie de boîtier de filtre (200) et la section d'étanchéité (214), au moins au nombre d'une, étant disposée dans une zone de l'ouverture d'évacuation (210) tournée vers l'espace intérieur de la partie de boîtier de filtre (200).

8. Partie de boîtier de filtre selon la revendication 6 ou 7, la section de raccordement (212), au moins au nombre d'une, de l'ouverture d'évacuation (210) présentant une section transversale plus grande que la section d'étanchéité (214), au moins au nombre d'une, de l'ouverture d'évacuation (210).

9. Partie de boîtier de filtre selon l'une quelconque des revendications 6 à 8, la section de raccordement (212), au moins au nombre d'une, de l'ouverture d'évacuation (210) et le segment de raccordement (120) de l'élément de fermeture (100) présentant chacun des éléments de raccordement amovibles (122, 213) complémentaires les uns aux autres.

10. Partie de boîtier de filtre selon l'une quelconque des revendications 6 à 9, les parois de l'ouverture d'évacuation (210) présentant un profil, en particulier un profil étagé, à l'extérieur de la zone d'étanchéité (215), au moins au nombre d'une.

11. Élément filtrant (300) ayant un milieu filtrant (316) et au moins un disque d'extrémité (340), le disque d'extrémité (340), au moins au nombre d'un, présentant une partie d'engagement (310) avec au moins un axe central (360) et au moins une zone d'engagement (312) s'étendant au moins partiellement sur la circonférence, au moins un axe central (360) de la partie d'engagement (310) étant décalé par rapport à au moins un axe central de l'élément filtrant (300) et/ou décalé par rapport à l'axe central du disque d'extrémité (340).

12. Élément filtrant (300) selon la revendication 11, la partie d'engagement (310) étant une ouverture d'évacuation (310) qui traverse le disque d'extrémité (340) et communique fluidiquement avec un espace intérieur d'élément, et la zone d'engagement (312) étant une zone d'étanchéité (314).

13. Système de filtre (10) ayant une partie de boîtier de filtre (200) selon l'une quelconque des revendications 6 à 10, qui comprend un espace intérieur et une ouverture d'évacuation (210) couplée à l'espace intérieur, un élément de fermeture (100) selon l'une quelconque des revendications 1 à 5 fermant de manière étanche l'ouverture d'évacuation (210) dans au moins une première position et libérant au moins partiellement l'ouverture d'évacuation (210) dans au moins une deuxième position, un élément filtrant (300) ayant une partie d'engagement (310) étant disposé dans l'espace intérieur de la partie de boîtier de filtre (200), la partie d'engagement (310) de l'élément filtrant (300) étant en prise ou pouvant être mise en prise avec au moins une zone d'étanchéité (142) de l'élément de fermeture (100).

14. Système de filtre (10) selon la revendication 13, l'élément filtrant (300) étant un élément filtrant selon la revendication 11 ou 12, la partie d'engagement (310) étant une ouverture d'évacuation (310), l'ouverture d'évacuation (310) de l'élément filtrant étant couplée fluidiquement à l'ouverture d'évacuation (210) de la partie de boîtier de filtre (200), de préférence via une section d'extrémité de l'ouverture d'évacuation (310) de l'élément filtrant tournée vers la partie de boîtier de filtre (200).

15. Système de filtre selon la revendication 14, un axe central (360) de l'ouverture d'évacuation (310) de l'élément filtrant (300) étant décalé par rapport à un autre axe central de l'élément filtrant (300) et/ou décalé par rapport à un axe central de la partie de boîtier de filtre (200) et/ou décalé par rapport à au moins un axe central (260, 280) de l'ouverture d'évacuation (210) de la partie de boîtier de filtre (200).

16. Utilisation d'un élément filtrant (300) dans un système de filtre (10) selon l'une quelconque des revendications 13 à 15, l'élément filtrant (300) étant introduit dans un espace intérieur d'une partie de boîtier de filtre (200) et aligné avec la partie de boîtier de filtre (200) de telle sorte qu'au moins un axe central (360) d'une partie d'engagement (310) de l'élément filtrant (300) est décalé par rapport à au moins un axe central (260, 280) d'une ouverture d'évacuation (210) de la partie de boîtier de filtre (200).

17. Utilisation d'un élément de fermeture (100) selon l'une quelconque des revendications 1 à 5 dans un système de filtre (10) selon l'une quelconque des revendications 13 à 15, l'élément de fermeture (100) étant inséré dans une ouverture d'évacuation (210) d'une partie de boîtier de filtre (200), au moins une première section (144) d'un segment de fermeture (140) faisant saillie dans au moins une section d'étanchéité (214) de l'ouverture d'évacuation (210), au moins une zone d'étanchéité (142) du segment de fermeture (140), au moins une zone d'étanchéité (215) de la section d'étanchéité (214) de l'ouverture d'évacuation (210) et au moins un élément d'étanchéité (150) assurant l'étanchéité de l'ouverture d'évacuation (210) dans la section d'étanchéité correspondante (214), un axe central (181) d'une première section (144) du segment de fermeture (140) étant disposé de manière à coïncider avec un axe central (280) de la section d'étanchéité (214) de l'ouverture d'évacuation (210), un élément de raccordement (122) d'un segment de raccordement (120) de l'élément de fermeture (100) formant une liaison amovible avec un élément de raccordement (213) d'une section de raccordement (212) de l'ouverture d'évacuation (210), un axe central (160) du segment de raccordement (120) étant disposé de manière à coïncider avec un axe central (260) de la section de raccordement (212).
